# EUROPEAN PATENT APPLICATION

(11) **EP 4 538 788 A1**
(43) Date of publication of application: **16.04.2025**
(21) Application number: 23820102.4
(22) Date of filing: 08.06.2023
(51) Int. Cl.: G03B 5/04, G03B 17/12, G03B 30/00, G02B 27/64

(54) **CAMERA ACTUATOR AND CAMERA MODULE COMPRISING SAME**

(30) Priority: 08.06.2022 KR 20220069450
(71) Applicant: LG INNOTEK CO. LTD, Gangseo-gu Seoul 07796 (KR)
(72) Inventor: LEE, Chung Hui, Seoul 07796 (KR); KIM, Kyung Won, Seoul 07796 (KR)
(74) Representative: DREISS Patentanwälte PartG mbB
(86) International application number: PCT/KR2023/007806
(87) International publication number: WO 2023/239167

(57) **Abstract**

An embodiment of the present invention provides a camera actuator comprising: a housing; a first lens assembly and a second lens assembly moving in an optical axis direction with reference to the housing; a ball part positioned in the first lens assembly and the second lens assembly; and a driving part for moving the first lend assembly and a second lens assembly, wherein at least one of the first lens assembly and the second lens assembly includes: a receiving part for receiving a lens; a guiding part which is in contact with the receiving part and at which the ball part is positioned; and a lens protrusion part which is in contact with the receiving part and corresponds to the guiding part.

## Description

### [Technical Field]

The present invention relates to a camera actuator and a camera module including the same.

### [Background Art]

A camera is a device for taking pictures or videos by capturing images of subjects and is mounted on mobile devices, drones, vehicles, or the like. To improve the quality of the image, a camera module may have an image stabilizer (IS) function for correcting or preventing the image shake caused by the movement of a user, an auto focusing (AF) function for aligning a focal length of a lens by automatically adjusting an interval between an image sensor and the lens, and a zooming function for capturing a remote subject by increasing or decreasing the magnification of the remote subject through a zoom lens.

However, to accurately perform an accurate zooming function, AF function, and the like in the camera module, the moving lens assembly having high straightness is required. Furthermore, there is a need for a collision-absorbing structure for protecting a glass of the lens assembly to provide improved optical performance and the like.

### [Disclosure]

### [Technical Problem]

The present invention is directed to providing a camera actuator and a camera module, which include a lens assembly having high straightness.

In addition, the present invention is directed to providing a camera actuator and a camera module, which have improved reliability through the impact absorption of lens assemblies in AF/zoom camera actuators.

In addition, the present invention is directed to providing a camera actuator and a camera module, which prevent breakage of a glass in a first lens assembly.

The present invention is directed to providing a camera actuator applicable to ultra-slim, ultra-small, and high-resolution cameras.

The objects of embodiments are not limited thereto and may also include objects or effects that may be identified from the configurations or embodiments to be described below.

### [Technical Solution]

A camera actuator according to an embodiment of the present invention includes a housing, a first lens assembly and a second lens assembly that move in an optical axis direction with respect to the housing, a ball part positioned in the first lens assembly and the second lens assembly, and a driving part that moves the first lens assembly and the second lens assembly, wherein at least one of the first lens assembly and the second lens assembly includes a receiving part that receives a lens, a guiding part which is in contact with the receiving part and on which the ball part is positioned, and a lens protruding part in contact with the receiving part and corresponding to the guiding part.

The guiding part may be positioned on one side surface of the receiving part, and the lens protruding part may be positioned on the other side surface of the receiving part.

An upper surface of the guiding part may be disposed at a front end of an upper surface of the lens protruding part.

A lower surface of the guiding part may be disposed at a rear end of a lower surface of the lens protruding part.

A length of the lens protruding part may be smaller than a length of the guiding part.

The lens protruding part may include a plate, and a support connected to the plate, and the support may be disposed at a rear end of the plate.

A height of the plate may be greater than a height of the support.

A length of the plate may be smaller than a length of the support.

The lens protruding part may include a first pin groove disposed in an upper surface of the plate.

The first pin groove may overlap the support along an optical axis.

The guiding part may include a second pin groove disposed in an upper surface of the guiding part.

At least portions of the first pin groove and the second pin groove may overlap each other.

The first pin groove may be disposed at a rear end of the second pin groove.

The guiding part may include a side plate, and a wing portion disposed between the side plate and the receiving part, and a thickness of the wing portion may vary in an optical axis direction.

The wing portion may overlap the second pin groove along an optical axis.

The side plate may include a first region, a second region, and a third region disposed the first region and the second region, the first region may include a first recess, the second region may include a second recess, and a driving yoke may be disposed in the third region.

The driving yoke may come into contact with the driving part.

The camera actuator may include a first stopper disposed at one end of the housing and a second stopper disposed at the other end, wherein the first stopper may include a 1-1 stopper disposed at one side thereof and a 1-2 stopper disposed at the other side, and the second stopper may include a 2-1 stopper disposed at one side thereof and a 2-2 stopper disposed at the other side.

A distance between the 1-1 stopper and the guiding part of the first lens assembly may be smaller than a distance between the 1-2 stopper and the lens protruding part of the first lens assembly.

A distance between the 2-2 stopper and the guiding part of the second lens assembly may be smaller than a distance between the 2-1 stopper and the lens protruding part of the second lens assembly.

### [Advantageous Effects]

According to embodiments of the present invention, it is possible to implement a camera actuator and a camera module, which have a lens assembly having high straightness.

In addition, according to the present invention, it is possible to implement a camera actuator and a camera module, which have improved reliability through the impact absorption of lens assemblies in AF/zoom camera actuators.

In addition, according to the present invention, it is possible to implement a camera actuator and a camera module, which prevent breakage of a glass in a first lens assembly.

According to the present invention, it is possible to implement a camera actuator applicable to ultra-slim, ultra-small, and high-resolution cameras.

Various and beneficial advantages and effects of the present invention are not limited to the above-described contents and will be more readily understood in a process of describing specific embodiments of the present invention.

### [Description of Drawings]

FIG. 1 is a perspective view of a camera module according to an embodiment.
FIG. 2 is an exploded perspective view of the camera module according to the embodiment.
FIG. 3 is a view of the camera module along line A-A' in FIG. 1.
FIG. 4 is a perspective view showing a first camera actuator according to the embodiment.
FIG. 5 is an exploded perspective view of the first camera actuator according to the embodiment.
FIG. 6A is a perspective view of a first housing of the first camera actuator according to the embodiment.
FIG. 6B is a perspective view in a different direction from FIG. 6A.
FIG. 6C is a front view of the first housing of the first camera actuator according to the embodiment.
FIG. 7 is a perspective view of an optical member of the first camera actuator according to the embodiment.
FIG. 8A is a perspective view of a holder of the first camera actuator according to the embodiment.
FIG. 8B is a bottom view of the holder of the first camera actuator according to the embodiment.
FIG. 8C is a front view of the holder of the first camera actuator according to the embodiment.
FIG. 8D is a rear view of a second member of the first camera actuator according to the embodiment.
FIG. 8E is a bottom view of the second member of the first camera actuator according to the embodiment.
FIG. 9A is a perspective view of a tilting guide part of the first camera actuator according to the embodiment.
FIG. 9B is a perspective view in a different direction from FIG. 9A.
FIG. 9C is a view along line F-F' in FIG. 9A.
FIG. 10 is a view showing a first driving part of the first camera actuator according to the embodiment.
FIG. 11A is a perspective view of the first camera actuator according to the embodiment.
FIG. 11B is a view along line P-P' in FIG. 11A.
FIG. 11C is a view along line Q-Q' in FIG. 11A.
FIG. 12A is a perspective view of the first camera actuator according to the embodiment.
FIG. 12B is a view along line S-S' in FIG. 12A.
FIG. 12C is an exemplary view of the movement of the first camera actuator shown in FIG. 12B.
FIG. 13A is a view along line R-R' in FIG. 12A.
FIG. 13B is an exemplary view of a movement of the first camera actuator shown in FIG. 13A.
FIG. 14 is a perspective view of a second camera actuator according to an embodiment.
FIG. 15 is an exploded perspective view of the second camera actuator according to the embodiment.
FIG. 16 is a view along line D-D' in FIG. 14.
FIGS. 17A, 17B, and 17C are perspective views of a second housing in the second camera actuator according to the embodiment.
FIGS. 18 and 19 are views for describing each driving of a lens assembly according to the embodiment.
FIG. 20 is a view for describing driving of the second camera actuator according to the embodiment.
FIG. 21 is a schematic diagram showing a circuit board according to an embodiment.
FIG. 22 is a perspective view of a first lens assembly, a first bonding member, a second bonding member, and a second lens assembly according to the embodiment.
FIG. 23 is a perspective view of the first lens assembly (or the second lens assembly) according to the embodiment.
FIG. 24 is a front view of the first lens assembly (or the second lens assembly) according to the embodiment.
FIG. 25 is one side view of the first lens assembly (or the second lens assembly) according to the embodiment.
FIG. 26 is a rear view of the first lens assembly (or the second lens assembly) according to the embodiment.
FIG. 27 is another side view of the first lens assembly (or the second lens assembly) according to the embodiment.
FIG. 28 is a cross-sectional view of a second camera actuator according to the embodiment.
FIG. 29 is an enlarged view of portion P in FIG. 28.
FIG. 30 is a perspective view of a mobile terminal to which the camera module according to the embodiment is applied.
FIG. 31 is a perspective view of a vehicle to which the camera module according to the embodiment is applied.

### [Mode for Invention]

Since the present invention may have various changes and various embodiments, specific embodiments are illustrated and described in the accompanying drawings. However, it should be understood that it is not intended to limit specific embodiments, and it should be understood to include all modifications, equivalents, and substitutes included in the spirit and scope of the present invention.

Terms including ordinal numbers such as second or first may be used to describe various components, but the components are not limited by the terms. The terms are used only for the purpose of distinguishing one component from another. For example, a second component may be referred to as a first component, and similarly, the first component may also be referred to as the second component without departing from the scope of the present invention. The term "and/or" includes a combination of a plurality of related listed items or any of the plurality of related listed items.

When a first component is described as being "connected" or "coupled" to a second component, it should be understood that the first component may be directly connected or coupled to the second component or a third component may be present therebetween. On the other hand, when a certain component is described as being "directly connected" or "directly coupled" to another component, it should be understood that others components are not present therebetween.

The terms used in the present application are only used to describe specific embodiments and are not intended to limit the present invention. The singular includes the plural unless the context clearly dictates otherwise. In the application, it should be understood that terms "include" and "have" are intended to specify that a feature, a number, a step, an operation, a component, a part, or a combination thereof described in the specification is present, but do not preclude the possibility of the presence or addition of one or more other features, numbers, steps, operations, components, parts, or combinations thereof.

Unless defined otherwise, all terms used herein, including technical or scientific terms, have the same meaning as commonly understood by those skilled in the art to which the present invention pertains. Terms such as those defined in a commonly used dictionary should be construed as having a meaning consistent with the meaning in the context of the related art and should not be construed in an ideal or excessively formal meaning unless explicitly defined in the application.

Hereinafter, embodiments will be described in detail with reference to the accompanying drawings, and the same or corresponding components are denoted by the same reference numeral regardless of the reference numerals, and overlapping descriptions thereof will be omitted.

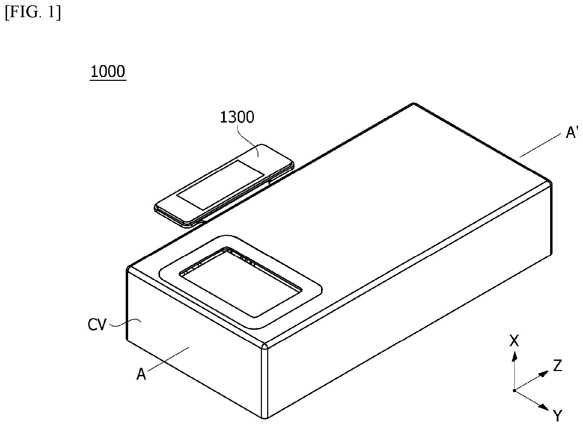

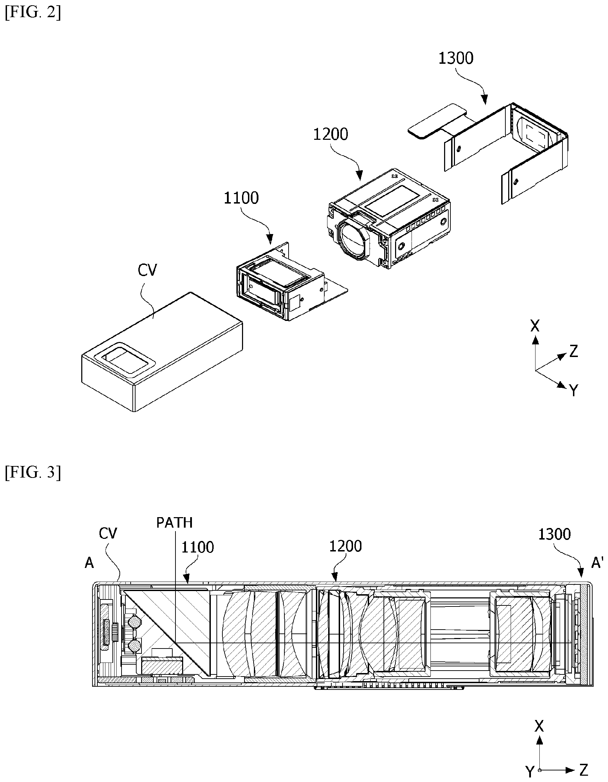

FIG. 1 is a perspective view of a camera module according to an embodiment, FIG. 2 is an exploded perspective view of the camera module according to the embodiment, and FIG. 3 is a cross-sectional view along line A-A' in FIG. 1.

Referring to FIGS. 1 and 2, a camera module 1000 according to the embodiment may include a cover CV, a first camera actuator 1100, a second camera actuator 1200, and a circuit board 1300. Here, the first camera actuator 1100 may be used interchangeably with "first actuator," and the second camera actuator 1200 may be used interchangeably with "second actuator."

The cover CV may cover the first camera actuator 1100 and the second camera actuator 1200. It is possible to increase coupling strength between the first camera actuator 1100 and the second camera actuator 1200 by the cover CV.

Furthermore, the cover CV may be made of a material that blocks electromagnetic waves. Therefore, it is possible to easily protect the first camera actuator 1100 and the second camera actuator 1200 in the cover CV.

In addition, the first camera actuator 1100 may be an optical image stabilizer (OIS) actuator. For example, the first camera actuator 1100 may move an optical member in a direction perpendicular to an optical axis (axis of incident light).

The first camera actuator 1100 may include a fixed focal length lens disposed in a predetermined barrel (not shown). The fixed focal length lens may be referred to as "single focal length lens" or "single lens."

The first camera actuator 1100 may change an optical path. In an embodiment, the first camera actuator 1100 may vertically change the optical path through an internal optical member (e.g., a prism or a mirror). With this configuration, even when a thickness of a mobile terminal is decreased, a lens with a focal length that is greater than the thickness of the mobile terminal is disposed in the mobile terminal through a change in the optical path so that magnification and auto focusing (AF), zooming, and OIS functions may be performed.

However, the present invention is not limited thereto, and the first camera actuator 1100 may change the optical path vertically or at a predetermined angle multiple times.

The second camera actuator 1200 may be disposed at a rear end of the first camera actuator 1100. The second camera actuator 1200 may be coupled to the first camera actuator 1100. In addition, mutual coupling may be performed in any method.

In addition, the second camera actuator 1200 may be a zoom actuator or an AF actuator. For example, the second camera actuator 1200 may support one lens or a plurality of lenses and perform an AF function or a zooming function by moving the lenses according to a predetermined control signal of a control unit.

In addition, one lens or the plurality of lenses may independently or individually move in an optical axis direction so that the circuit board 1300 may be disposed at a rear end of the second camera actuator 1200.

The circuit board 1300 may be electrically connected to the second camera actuator 1200 and the first camera actuator 1100. In addition, a plurality of circuit boards 1300 may be provided.

A camera module according to the embodiment may be formed of one camera module or a plurality of camera modules. For example, the plurality of camera modules may include a first camera module and a second camera module.

In addition, the first camera module may include one actuator or a plurality of actuators. For example, the first camera module may include the first camera actuator 1100 and the second camera actuator 1200.

In addition, the second camera module may include an actuator (not shown) disposed in a predetermined housing (not shown) and capable of driving a lens part. The actuator may be a voice coil motor, a micro actuator, a silicon actuator, and the like and applied in any method such as an electrostatic method, a thermal method, a bimorph method, and an electrostatic force method, but the present invention is not limited thereto. In addition, in the present specification, the camera actuator may be referred to as "actuator" or the like. In addition, the camera module formed of the plurality of camera modules may be mounted in any electronic device such as a mobile terminal. Furthermore, the actuator may be a device for moving or tilting the lens or the optical member. However, hereinafter, the actuator will be conceptually described as including the lens or the optical member. Furthermore, the actuator may be referred to as "lens transfer device," "lens moving device," "optical member transfer device," "optical member moving device," or the like.

Referring to FIG. 3, the camera module according to the embodiment may include the first camera actuator 1100 for performing the OIS function and the second camera actuator 1200 for performing the zooming function and the AF function.

Light may be incident on the camera module or the first camera actuator through an opening region positioned in an upper surface of the first camera actuator 1100. That is, the light may be incident on the first camera actuator 1100 in the optical axis direction (e.g., an X-axis direction with respect to incident light), and the optical path may be changed in a vertical direction (e.g., a Z-axis direction) through the optical member. In addition, the light may pass through the second camera actuator 1200 and may be incident on an image sensor IS positioned at one end of the second camera actuator 1200 (PATH). In the present specification, the Z-axis direction or a third direction will be described as the optical axis direction as follows.

In the present specification, a lower surface indicates one side in a first direction. In addition, the first direction is the X-axis direction in the drawings and may be used interchangeably with a second axis direction or the like. A second direction is a Y-axis direction in the drawings and may be used interchangeably with a first axis direction or the like. The second direction is a direction perpendicular to the first direction. In addition, the third direction is the Z-axis direction in the drawings and may be used interchangeably with a third axis direction or the like. In addition, the third direction is perpendicular to both the first direction and the second direction. Here, the third direction (Z-axis direction) corresponds to the optical axis direction, and the first direction (X-axis direction) and the second direction (Y-axis direction) are directions perpendicular to the optical axis. In addition, hereinafter, the optical axis direction is the third direction (Z-axis direction) in the description of the first and second camera actuators 1200, and based on this, the following description will be made.

In addition, in the present specification, an inside may be a direction from the cover CV to the first camera actuator, and an outside may be a direction opposite to the inside. That is, the first camera actuator and the second camera actuator may be positioned inside the cover CV, and the cover CV may be positioned outside the first camera actuator or the second camera actuator.

In addition, with this configuration, the camera module according to the embodiment may resolve the spatial limitations of the first camera actuator and the second camera actuator by changing the optical path. That is, the camera module according to the embodiment may extend the optical path while minimizing the thickness of the camera module in response to the change in the optical path. Furthermore, it should be understood that the second camera actuator may provide a high range of magnification by controlling a focus or the like in the extended optical path.

In addition, the camera module according to the embodiment can implement OIS by controlling the optical path through the first camera actuator, thereby minimizing the occurrence of a decentering or tilting phenomenon and providing the best optical characteristics.

Furthermore, the second camera actuator 1200 may include an optical system and a lens driving part. For example, at least one of a first lens assembly, a second lens assembly, and a third lens assembly may be disposed in the second camera actuator 1200.

In addition, the second camera actuator 1200 may include a coil and a magnet and perform a high-magnification zooming function and the AF function.

For example, although the first lens assembly and the second lens assembly may be moving lenses that move through the coil, the magnet, and a guide pin and the third lens assembly may be a fixed lens, the present invention is not limited thereto. For example, the third lens assembly may perform a function of a focator by which light forms an image at a specific position, and the first lens assembly may perform a function of a variator for re-forming an image formed by the third lens assembly, which is the focator, at another position. Meanwhile, the first lens assembly may be in a state in which a magnification change is large because a distance to a subject or an image distance is greatly changed, and the first lens assembly, which is the variator, may play an important role in a focal length or magnification change of the optical system. Meanwhile, imaging points of an image formed by the first lens assembly, which is the variator, may be slightly different depending on a position. Therefore, the second lens assembly may perform a position compensation function for the image formed by the variator. For example, the second lens assembly may perform a function of a compensator for accurately forming an image at an actual position of the image sensor using the imaging points of the image formed by the first lens assembly which is the variator. For example, the first lens assembly and the second lens assembly may be driven by an electromagnetic force generated by the interaction between the coil and the magnet. The above description may be applied to a lens assembly to be described below. In addition, the first lens assembly to the third lens assembly may move in the optical axis direction, that is, in the third direction. In addition, the first lens assembly to the third lens assembly may move in the third direction independently or dependently. In the present invention, the first lens assembly and the second lens assembly may move in the optical axis direction. In addition, the third lens assembly may be positioned at a front end of the first lens assembly or at a rear end of the second lens assembly. In addition, the third lens assembly may not move in the optical axis direction. That is, the third lens assembly may be a fixed part. In addition, the first and second lens assemblies may be moving parts.

Meanwhile, when the OIS actuator and the AF/zoom actuator are disposed according to the embodiment of the present invention, the magnetic field interference with AF/zoom magnets can be prevented when OIS is driven. Since a first driving magnet of the first camera actuator 1100 is disposed separately from the second camera actuator 1200, it is possible to prevent the magnetic field interference between the first camera actuator 1100 and the second camera actuator 1200. In the present specification, OIS may be used interchangeably with terms such as hand shaking correction, optical image stabilization, optical image correction, or shaking correction.

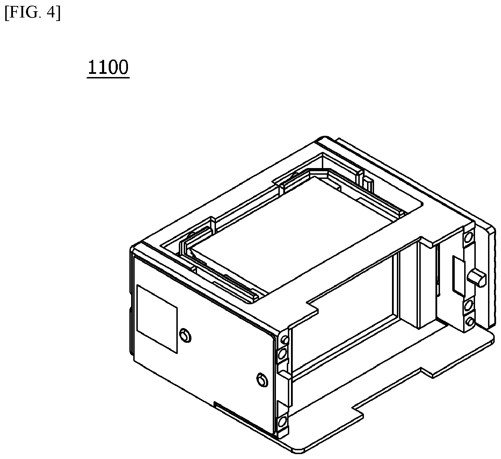

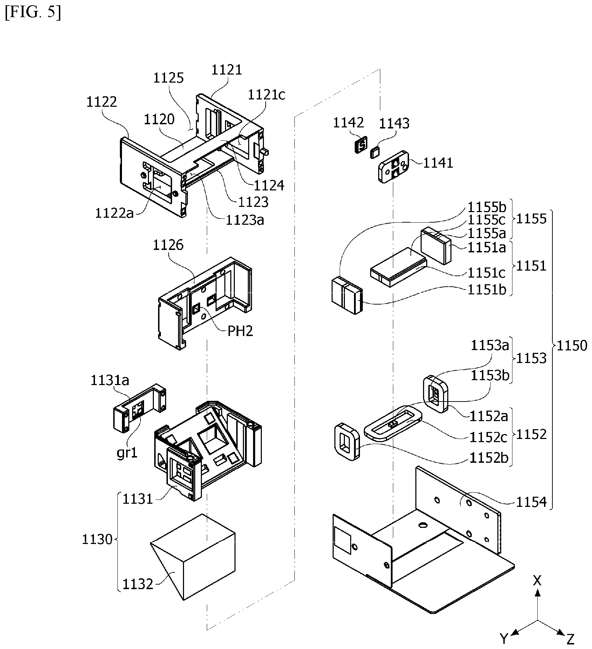

FIG. 4 is a perspective view of a first camera actuator according to the embodiment, and FIG. 5 is an exploded perspective view of the first camera actuator according to the embodiment.

Referring to FIGS. 4 and 5, the first camera actuator 1100 according to the embodiment includes a first housing 1120, a mover 1130, a rotating part 1140, a first driving part 1150, a first member 1126, and a second member 1131a.

The mover 1130 may include a holder 1131 and an optical member 1132 seated on the holder 1131. In addition, the rotating part 1140 may include a tilting guide part 1141 and a second magnet 1142 and a first magnet 1143 having the same or different polarities to press the tilting guide part 1141. For example, the first magnet 1143 and the second magnet 1142 may have facing surfaces with the same polarity. In addition, the first driving part 1150 includes a driving magnet 1151, a driving coil 1152, a Hall sensor part 1153, a first board part 1154, and a yoke part 1155.

First, the first camera actuator 1100 may include a shield can (not shown). The shield can (not shown) may be positioned at an outermost side of the first camera actuator 1100 to surround the rotating part 1140 and the first driving part 1150, which will be described below.

The shield can (not shown) can block or reduce electromagnetic waves generated from the outside. That is, the shield can (not shown) can reduce the occurrence of a malfunction of the rotating part 1140 or the first driving part 1150.

A first housing 1120 may be positioned inside the shield can (not shown). When there is no shield can, the first housing 1120 may be positioned at the outermost side of the first camera actuator.

In addition, the first housing 1120 may be positioned inside the first board part 1154 described below. The first housing 1120 may be fastened by being fitted into or matched with the shield can (not shown).

The first housing 1120 may include a first housing side portion 1121, a second housing side portion 1122, a third housing side portion 1123, and a fourth housing side portion 1124. Detailed description thereof will be made below.

The first member 1126 may be disposed in the first housing 1120. The second member 1131a may pass through some regions of the first member 1126. The first member 1126 may be disposed in a housing. The first member 1126 may have a structure integrally formed with or separated from the first housing 1120.

The mover 1130 may include the holder 1131 and the optical member 1132 seated on the holder 1131.

The holder 1131 may be seated in a receiving part 1125 of the first housing 1120. The holder 1131 may include a first holder outer surface to a fourth holder outer surface corresponding to the first housing side portion 1121, the second housing side portion 1122, the third housing side portion 1123, and the first member 1126, respectively. For example, the first holder outer surface to the fourth holder outer surface may correspond to or face inner surfaces of the first housing side portion 1121, the second housing side portion 1122, the third housing side portion 1123, and the first member 1126, respectively.

In addition, the holder 1131 may include the second member 1131a disposed in a fourth seating groove. The second member 1131a may be coupled to the holder 1131 through the first member 1126. The second member 1131a and the holder 1131 may be coupled by any bonding member or coupling member. Detailed description thereof will be made below.

The optical member 1132 may be seated on the holder 1131. To this end, the holder 1131 may have a seating surface, and the seating surface may be formed by a receiving groove. In an embodiment, the optical member 1132 may be formed of a mirror or a prism. Hereinafter, the optical member 1132 is shown as being the prism, but may be formed of a plurality of lenses as in the above-described embodiment. Alternatively, the optical member 1132 may be formed of the plurality of lenses and the prism or the mirror. In addition, the optical member 1132 may include a reflector disposed therein. However, the present invention is not limited thereto.

In addition, the optical member 1132 may reflect light reflected from the outside (e.g., an object) into the camera module. That is, the optical member 1132 can resolve the spatial limitations of the first camera actuator and the second camera actuator by changing the path of the reflected light. Therefore, it should be understood that the camera module may provide a high range of magnification by extending the optical path while minimizing a thickness thereof.

Additionally, the second member 1131a may be coupled to the holder 1131. The second member 1131a may be disposed outside the holder 1131 and inside the housing. In addition, the second member 1131a may be seated in an additional groove positioned in a region other than the fourth seating groove of the fourth holder outer surface of the holder 1131. Therefore, the second member 1131a may be coupled to the holder 1131, and at least a portion of the first member 1126 may be positioned between the second member 1131a and the holder 1131. For example, the at least a portion of the first member 1126 may be disposed in a space formed between the second member 1131a and the holder 1131. In addition, as described above, the second member 1131a may pass through holes formed in the first member 1126.

In addition, the second member 1131a may have a structure separated from the holder 1131. With this configuration, the first camera actuator may be easily assembled as will be described below. Alternatively, the second member 1131a may be integrally formed with the holder 1131, but will be described below as having the separated structure.

The rotating part 1140 includes the tilting guide part 1141 and the second magnet 1142 and the first magnet 1143 having the same polarity to press the tilting guide part 1141.

The tilting guide part 1141 may be coupled to the mover 1130 and the first housing 1120. Specifically, the tilting guide part 1141 may be disposed between the holder 1131 and the first member 1126. Therefore, the tilting guide part 1141 may be coupled to the mover 1130 of the holder 1131 and the first housing 1120. However, unlike the above description, in the present embodiment, the tilting guide part 1141 may be disposed between the first member 1126 and the holder 1131. Specifically, the tilting guide part 1141 may be positioned between the first member 1126 and the fourth seating groove of the holder 1131. For example, at least a portion of the tilting guide part 1141 may be positioned in the fourth seating groove.

The second member 1131a, the first member 1126, the tilting guide part 1141, and the holder 1131 may be sequentially disposed in the third direction (Z-axis direction). In addition, the second magnet 1142 and the first magnet 1143 may be respectively seated in a first groove gr1 formed in the second member 1131a and a second groove gr2 formed in the first member 1126. In the present embodiment, the first groove gr1 and the second groove gr2 may have different positions from the first and second grooves described above in other embodiments. However, the first groove gr1 is positioned in the second member 1131a and moves integrally with the holder and the second member 1131a, and the second groove gr2 is positioned on the first member 1126 corresponding to the first groove gr1 and coupled to the first housing 1120. Therefore, the following description will be made by interchangeably using these terms. Furthermore, the first groove and the second groove may be grooves as described above. Alternatively, the first groove and the second groove may be replaced with the form of a hole.

In addition, the tilting guide part 1141 may be disposed adjacent to the optical axis. Therefore, the actuator according to the embodiment may easily change the optical path according to first-axis tilting and second-axis tilting, which will be described below.

The tilting guide part 1141 may include first protruding portions disposed to be spaced apart from each other in the first direction (X-axis direction) and second protruding portions disposed to be spaced apart from each other in the second direction (Y-axis direction). In addition, the first protruding portion and the second protruding portion may protrude in opposite directions. Detailed description thereof will be made below.

In addition, as described above, the second magnet 1142 may be positioned in the second member 1131a. In addition, the first magnet 1143 may be positioned in the first member 1126.

The second magnet 1142 and the first magnet 1143 may have the same polarity. For example, the second magnet 1142 may be a magnet having an N pole, and the first magnet 1143 may be a magnet having an N pole. Alternatively, conversely, the second magnet 1142 may be a magnet having an S pole, and the first magnet 1143 may be a magnet having an S pole.

For example, a first pole surface of the first magnet 1143 and a second pole surface of the second magnet 1142 facing the first pole surface may have the same polarity.

The second magnet 1142 and the first magnet 1143 may generate a repulsive force therebetween due to the above-described polarities. With this configuration, the above-described repulsive force may be applied to the second member 1131a or the holder 1131 coupled to the second magnet 1142 and the first member 1126 or the first housing 1120 coupled to the first magnet 1143. In this case, the repulsive force applied to the second member 1131a may be transmitted to the holder 1131 coupled to the second member 1131a. Therefore, the tilting guide part 1141 disposed between the second member 1131a and the first member 1126 may be pressed by the repulsive force. That is, the repulsive force may maintain the position of the tilting guide part 1141 between the holder 1131 and the first housing 1120 (or the first member 1126). With this configuration, the position between the mover 1130 and the first housing 1120 can be maintained even during X-axis tilting or Y-axis tilting. In addition, the tilting guide part may be in close contact with the first member 1126 and the holder 1131 by the repulsive force between the first magnet 1143 and the second magnet 1142. That is, the repulsive force by the first magnet 1143 and the second magnet 1142 may be a holding force for the position between the holder 1131 and the first housing 1120.

The first driving part 1150 includes the driving magnet 1151, the driving coil 1152, the Hall sensor part 1153, the first board part 1154, and the yoke part 1155. Description thereof will be made below. In addition, the yoke part 1155 may be referred to as a "first yoke part" in the first camera actuator. In addition, the yoke part in the second camera actuator may be referred to as a "second yoke part."

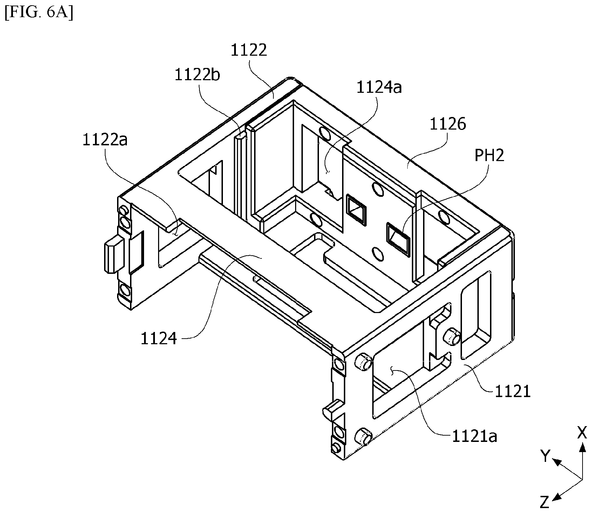

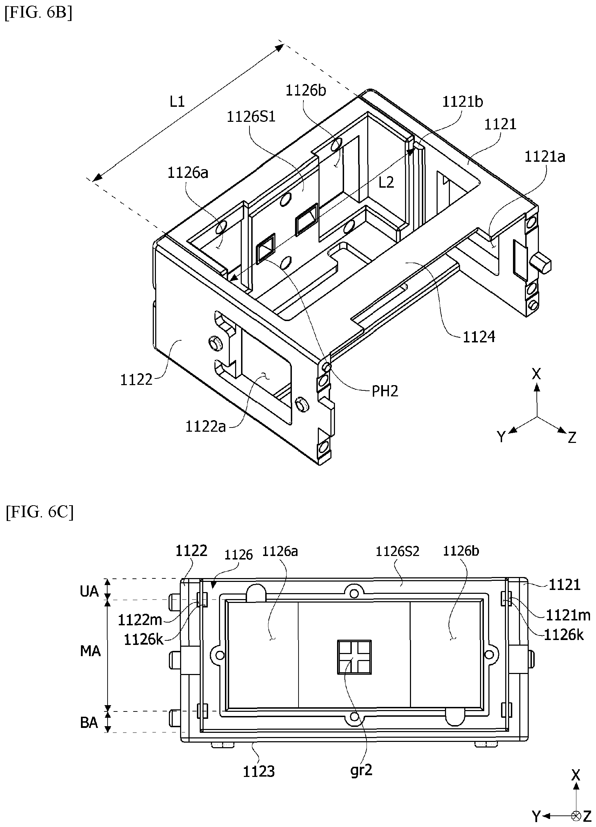

FIG. 6A is a perspective view of a first housing of the first camera actuator according to the embodiment, FIG. 6B is a perspective view in a different direction from FIG. 6A, and FIG. 6C is a front view of the first housing of the first camera actuator according to the embodiment.

Referring to FIGS. 6A to 6C, the first housing 1120 according to the embodiment may include the first housing side portion 1121 to the fourth housing side portion 1124. In addition, the first member 1126 may be integrally formed by being coupled to the first housing 1120. Therefore, the first member 1126 may be a component included in the first housing 1120. That is, the first housing 1120 may be integrally formed by being coupled to the first member 1126. Alternatively, the first housing 1120 may include the first member 1126.

The first housing side portion 1121 and the second housing side portion 1122 may be disposed to face each other. In addition, the third housing side portion 1123 and the fourth housing side portion 1124 may be disposed to face each other.

In addition, the third housing side portion 1123 and the fourth housing side portion 1124 may be disposed between the first housing side portion 1121 and the second housing side portion 1122.

The third housing side portion 1123 and the fourth housing side portion 1124 may come into contact with the first housing side portion 1124 and the second housing side portion 1121. In addition, the third housing side portion 1123 may be a lower surface of the first housing 1120. In addition, the fourth housing side portion 1124 may be an upper surface of the first housing 1120. In addition, the above-described contents may also be applied to description of a direction in the same manner.

In addition, the first housing side portion 1121 may include a first housing hole 1121a. A third coil described below may be positioned in the first housing hole 1121a.

In addition, the second housing side portion 1122 may include a second housing hole 1122a. In addition, a fourth coil 1152b described below may be positioned in the second housing hole 1122a.

In addition, the first housing side portion 1121 and the second housing side portion 1122 may be side surfaces of the first housing 1120.

The third coil and the fourth coil may be coupled to the first board part. In an embodiment, the third coil and the fourth coil may be electrically connected to the first board part so that a current may flow therethrough. The current is an element of an electromagnetic force capable of tilting the second camera actuator with respect to an X-axis.

In addition, the third housing side portion 1123 may include a third housing hole 1123a.

A fifth coil described below may be positioned in the third housing hole 1123a. In addition, the fifth coil 1152c may be electrically connected to the first board part in contact with the first housing 1120, and the fifth coil 1152c and the first board part may be coupled. Therefore, the fifth coil may be electrically connected to the first board part to receive a current from the first board part. The current is an element of an electromagnetic force capable of tilting the second camera actuator with respect to a Y-axis.

The first member 1126 may be seated between the first housing side portion 1121 to the fourth housing side portion 1124. Therefore, the first member 1126 may be positioned on the third housing side portion 1123. For example, the first member 1126 may be positioned at one side of the third housing side portion 1123. The first member 1126 and the holder may be sequentially positioned in the third direction.

The fourth housing side portion 1124 may be disposed between the first housing side portion 1121 and the second housing side portion 1122 and may come into contact with the first housing side portion 1121, the second housing side portion 1122, and the third housing side portion 1123.

In addition, the fourth housing side portion 1124 may include a fourth housing hole 1124a. The fourth housing hole 1124a may be positioned above the optical member. Therefore, light may be incident on the optical member through the fourth housing hole 1124a.

In addition, the first housing 1120 may include the receiving part 1125 formed by the first housing side portion 1121 to the fourth housing side portion 1124. The first member 1126, the second member 1131a, and the mover 1130 may be positioned in the receiving part 1125 as components.

In addition, the first housing 1120 may further include a fifth housing side portion facing the first member 1126. In addition, the fifth housing side portion may be disposed between the first housing side portion 1121 and the second housing side portion 1122 and may come into contact with the first housing side portion 1121, the second housing side portion 1122, and the third housing side portion 1123. In addition, the fifth housing side portion may include an opening region to provide a path along which the light reflected from the optical member 1132 moves. In addition, the fifth housing side portion may include protrusions, grooves, and the like to provide easy coupling with other camera actuators adjacent thereto. With this configuration, it is possible to increase the coupling strength between the fifth housing side portion, which provides the optical path and at the same time, has the opening providing the optical path, and other components, thereby suppressing the movement of the opening due to separation or the like and thus minimizing a change in optical path.

In addition, as described above, the first member 1126 may be a component included in the first housing 1120 by being coupled to the first housing 1120. That is, the first housing 1120 may include the first member 1126.

In addition, the first member 1126 may be disposed in the first housing 1120. Alternatively, the first member 1126 may be positioned in the first housing 1120.

In addition, the first member 1126 may be coupled to the first housing 1120. In an embodiment, the first member 1126 may be positioned between the first housing side portion 1121 and the second housing side portion 1122. In addition, the first member 1126 may be positioned between the third housing side portion 1123 and the fourth housing side portion 1124.

In addition, the first member 1126 may be positioned on the third housing side portion 1123 and may come into contact with the first housing side portion to the third housing side portion.

In addition, a first stop member 1121b may be positioned on an inner surface of the first housing side portion 1121. In addition, a second stop member 1122b may be positioned on an inner surface of the second housing side portion 1122.

The first stop member 1121b and the second stop member 1122b may be symmetrically positioned with respect to the first direction (X-axis direction). The first stop member 1121b and the second stop member 1122b may extend in the first direction (X-axis direction). With this configuration, even when the first member 1126 moves into the first housing 1120, a position of the first member 1126 may be maintained by the first stop member 1121b and the second stop member 1122b. That is, the first stop member 1121b and the second stop member 1122b may hold the position of the first member 1126 at one side of the first housing 1120.

Furthermore, the first stop member 1121b and the second stop member 1122b may fix the position of the first member 1126 to fix a position of the tilting guide part between the first member 1126 and the mover, thereby removing factors that cause errors such as vibrations. Therefore, the first camera actuator according to the embodiment can accurately perform the X-axis tilting and the Y-axis tilting.

In addition, a separation distance L2 between the first stop member 1121b and the second stop member 1122b in the second direction (Y-axis direction) may be smaller than a maximum length L1 of the first member 1126 in the second direction (Y-axis direction). Therefore, the first member 1126 may be assembled or inserted into the side surface of the first housing 1120 and coupled to the first housing 1120.

In addition, the first member 1126 includes a second protrusion groove in which the second protruding portion of the tilting guide part is seated. The second protrusion groove PH2 may be positioned in an inner surface 1126S1 of the first member 1126. Therefore, in the first member 1126, the protruding portion (e.g., the second protruding portion) of the tilting guide part is disposed adjacent to the prism in the fourth seating groove so that the protruding portion, which is a reference axis of tilting, is disposed adjacent to the center of gravity of the mover 1130. Therefore, when the holder tilts, a moment for moving the mover 1130 for tilting can be minimized. Therefore, it is also possible to minimize the current consumption for driving the coil, thereby reducing the power consumption of the camera actuator.

In addition, the first member 1126 may include through-holes 1126a and 1126b. The through-hole may be provided in plural and may include a first through-hole 1126a and a second through-hole 1126b.

First and second extensions of the second member, which will be described below, may pass through the first through-hole 1126a and the second through-hole 1126b, respectively. Therefore, the second member may be coupled to the first member. That is, the first housing may be coupled to the mover.

The second protrusion groove PH2 may be positioned between the first through-hole 1126a and the second through-hole 1126b. Therefore, a holding force between the second member and the first member may be generated by the repulsive force between the first and second magnets. That is, even when the mover tilts, the position between the first housing and the mover can be maintained.

The second protrusion groove PH2 may be positioned between the first through-hole 1126a and the second through-hole 1126b. With this configuration, it is possible to increase the coupling strength between the tilting guide part 1141 and the first member 1126, thereby preventing a reduction in tilting accuracy caused by the movement of the tilting guide part 1141 in the first housing.

In addition, the second groove gr2 may be positioned in an outer surface 1126S2 of the first member 1126. The first magnet may be seated in the second groove gr2. In addition, the outer surface 1126S2 of the first member 1126 may face an inner surface of the second member or a member base part. Furthermore, the second magnet seated on the second member and the first magnet of the first member 1126 may face each other and generate the above-described repulsive force. Therefore, since the first member 1126 presses the tilting guide part inward or the holder by the repulsive force, the mover may be spaced a predetermined distance from the third housing side portion in the first housing even without current application to the coil. That is, the coupling strength between the mover, the housing, and the tilting guide part can be maintained.

In addition, when the first member 1126 is formed integrally with the first housing 1120, it is possible to increase the coupling strength between the first member 1126 and the first housing 1120, thereby improving the reliability of the camera actuator. In addition, when the first member 1126 is formed separately from the first housing 1120, it is possible to increase the ease of assembling and manufacturing of the first member 1126 and the first housing 1120.

In addition, in an embodiment, the first member 1126 may include the first through-hole 1126a and the second through-hole 1126b as described above. In addition, the first through-hole 1126a and the second through-hole 1126b may be disposed side by side in the second direction (Y-axis direction) and may overlap each other.

In addition, the first member 1126 may include upper members UA positioned above the first through-hole 1126a and the second through-hole 1126b and bottom members BA positioned under the first through-hole 1126a and the second through-hole 1126b. Therefore, the first through-hole 1126a and the second through-hole 1126b may be positioned in the middle of the first member 1126. That is, the first member 1126 may include connection members MA positioned at side portions of the first through-hole 1126a and the second through-hole 1126b. That is, the upper member UA and the bottom member BA may be connected through the connection members MA. In addition, a plurality of bottom members BA may be formed to form the first and second through-holes and disposed to be spaced apart from each other in the second direction (Y-axis direction).

Therefore, the first member 1126 may have the upper members UA, thereby increasing stiffness. For example, it is possible to increase the stiffness of the first member 1126 compared to a case in which the upper member UA is not present. For example, in the present embodiment, a unit of stiffness may be N/µm. Therefore, it is possible to improve the reliability of the first camera actuator according to the embodiment.

In addition, a first coupling groove 1126k may be positioned in the outer surface 1126S2 of the first member 1126. The first coupling groove 1126k may be positioned at an edge of the outer surface 1126S2 of the first member 1126. In particular, the first coupling groove 1126k may be positioned at an end (e.g., left and right sides) of the outer surface 1126S2 of the first member 1126 and positioned adjacent to the first housing side portion 1121.

The first coupling groove 1126k may be positioned to correspond to second coupling grooves 1121m and 1122m of the first housing side portion 1121 and the second housing side portion 1122. In an embodiment, the first coupling groove 1126k may be positioned to face the second coupling grooves 1121m and 1122m of the first housing side portion 1121 and the second housing side portion 1122. The second coupling grooves 1121m and 1122m may be adjacent to the outer surface 1126S2 of the first member 1126 and positioned on the same side surface.

In an embodiment, a plurality of first coupling grooves 1126k and a plurality of second coupling grooves 1121m and 1122m may be formed, and the plurality of first coupling grooves 1126k and the plurality of second coupling grooves 1121m and 1122m may be positioned symmetrically in the first direction or the second direction.

In addition, bonding members may be applied to the first coupling groove 1126k and the second coupling grooves 1121m and 1122m. That is, the bonding member may be applied between the first housing side portion (or the second housing side portion) and the first member 1126, thereby increasing the coupling strength between the first housing 1120 and the first member 1126. The bonding members may include an epoxy or the like, but are not limited to the material.

In addition, the first member 1126 may further include the first protruding portion and the second protruding portion. The first protruding portion may come into contact with the first housing side portion, and the second protruding portion may come into contact with the second housing side portion. The first protrusion may extend from one end of the outer surface 1126S2 of the first member in the third direction (Z-axis direction). The second protrusion may extend from the other end of the outer surface 1126S2 of the first member in the third direction (Z-axis direction). In other words, the first protruding portion and the second protruding portion may extend toward the holder.

The position of the first protruding portion may be maintained by the first stop member 1121b, and the position of the second protruding portion may be maintained by the second stop member 1122b. Therefore, it is possible to improve the reliability of the camera actuator according to the embodiment.

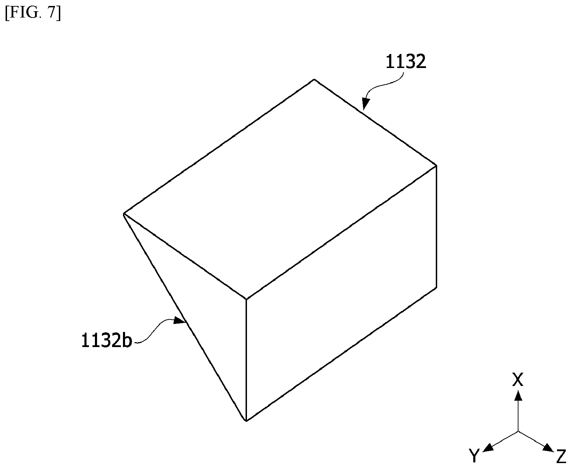

FIG. 7 is a perspective view illustrating an optical member of the first camera actuator according to the embodiment.

The optical member 1132 may be seated on the holder. The optical member 1132 may be a right angle prism as a reflector, but is not limited thereto.

In an embodiment, the optical member 1132 may have a protruding portion (not shown) formed on a portion of an outer surface thereof. The optical member 1132 may be easily coupled to the holder through the protruding portion (not shown). In addition, the holder may be coupled to the optical member 1132 by having a groove or a protrusion.

In addition, a lower surface 1132b of the optical member 1132 may be seated on the seating surface of the holder. Therefore, the lower surface 1132b of the optical member 1132 may correspond to the seating surface of the holder. In an embodiment, the lower surface 1132b may be formed as an inclined surface like the seating of the holder. Therefore, it is possible to prevent the optical member 1132 from being separated from the holder due to the movement of the prism according to the movement of the holder.

In addition, a groove may be formed in the lower surface 1132b of the optical member 1132, and a bonding member may be applied to the groove so that the optical member 1132 may be coupled to the holder. Alternatively, the holder may be coupled to the optical member 1132 by applying the bonding member to the groove or protrusion of the holder.

In addition, as described above, the optical member 1132 may have a structure in which the light reflected from the outside (e.g., an object) may be reflected into the camera module. As in the embodiment, the optical member 1132 may be formed of a single mirror. In addition, the optical member 1132 can resolve the spatial limitations of the first camera actuator and the second camera actuator by changing the path of the reflected light. Therefore, it should be understood that the camera module may provide a high range of magnification by extending the optical path while minimizing a thickness thereof. In addition, it should be understood that the camera module including the camera actuator according to the embodiment may provide a high range of magnification by extending the optical path while minimizing the thickness thereof.

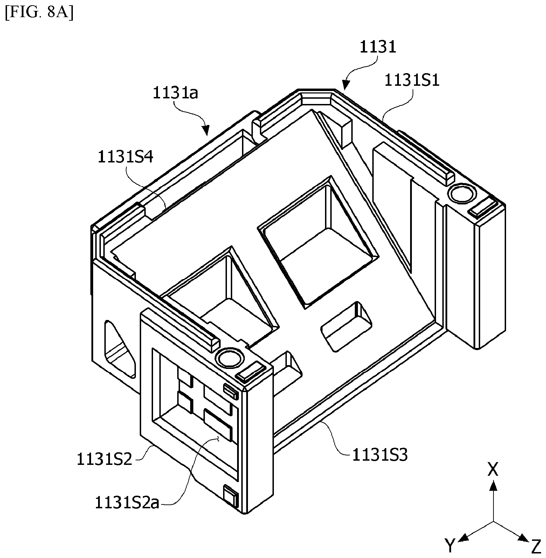

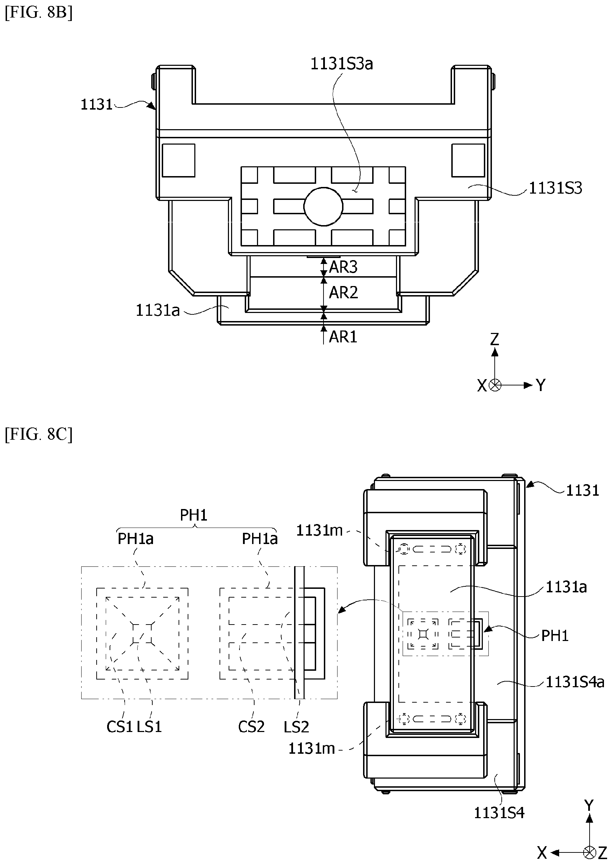

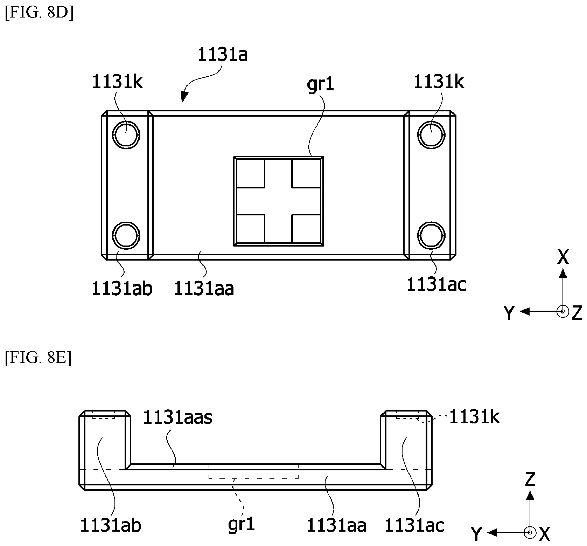

FIG. 8A is a perspective view of a holder of the first camera actuator according to the embodiment, FIG. 8B is a bottom view of a holder of the first camera actuator according to the embodiment, FIG. 8C is a front view of the holder of the first camera actuator according to the embodiment, FIG. 8D is a rear view of a second member of the first camera actuator according to the embodiment, and FIG. 8E is a bottom view of the second member of the first camera actuator according to the embodiment.

Referring to FIGS. 8A to 8E, the holder 1131 may include a seating surface 1131k on which the optical member 1132 is seated. The seating surface 1131k may be an inclined surface. In addition, the holder 1131 may include a stepped portion above the seating surface 1131k. In addition, the stepped portion of the holder 1131 may be coupled to the protruding portion (not shown) of the optical member 1132.

The holder 1131 may include a plurality of outer surfaces. For example, the holder 1131 may include a first holder outer surface 1131S1, a second holder outer surface 1131S2, a third holder outer surface 1131S3, and a fourth holder outer surface 1131S4.

The first holder outer surface 1131S1 may be positioned to face the second holder outer surface 1131S2. That is, the first holder outer surface 1131S1 may be symmetrically disposed with the second holder outer surface 1131S2 with respect to the first direction (X-axis direction).

The first holder outer surface 1131S1 may be positioned to correspond to the first housing side portion. That is, the first holder outer surface 1131S1 may be positioned to face the first housing side portion. In addition, the second holder outer surface 1131S2 may be positioned to correspond to the second housing side portion. That is, the second holder outer surface 1131S2 may be positioned to face the second housing side portion.

In addition, the first holder outer surface 1131S1 may include a first seating groove 1131S1a. In addition, the second holder outer surface 1131S2 may include a second seating groove 1131S2a. The first seating groove 1131S1a and the second seating groove 1131S2a may be symmetrically disposed with respect to the first direction (X-axis direction).

In addition, the first seating groove 1131S1a and the second seating groove 1131S2a may be disposed to overlap each other in the second direction (Y-axis direction). In addition, a third magnet 1151a may be disposed in the first seating groove 1131S1a, and a fourth magnet 1151b may be disposed in the second seating groove 1131S2a. The third magnet 1151a and the fourth magnet 1151b may also be symmetrically disposed with respect to the first direction (X-axis direction). In the present specification, it should be understood that the third magnet to the fifth magnet may be coupled to the housing through a yoke or a bonding member. A polarity of the third magnet and a polarity of the fourth magnet may be opposite to each other. For example, an N pole and an S pole of the third magnet may be sequentially disposed in the third direction, and an S pole and an N pole of the fourth magnet may be sequentially disposed in the third direction. As a modified example, the polarity of the third magnet and the polarity of the fourth magnet may be the same as each other by adjusting the current application or current directions of the third and fourth coils.

As described above, due to positions of the first and second seating grooves and the third and fourth magnets, an electromagnetic force generated by each magnet may be coaxially provided on the first holder outer surface S1131S1 and the second holder outer surface 1131S2. For example, a region (e.g., a portion in which the electromagnetic force is strongest) applied on the first holder outer surface S1131S1 and a region (e.g., a portion in which the electromagnetic force is strongest) applied on the second holder outer surface S1131S2 may be positioned on an axis parallel to the second direction (Y-axis direction). Therefore, the X-axis tilting may be accurately performed.

The third magnet 1151a may be disposed in the first seating groove 1131S1a, and the fourth magnet 1151b may be disposed in the second seating groove 1131S2a.

The third holder outer surface 1131S3 may come into contact with the first holder outer surface 1131S1 and the second holder outer surface 1131S2 and may be an outer surface extending from one sides of the first holder outer surface 1131S1 and the second holder outer surface 1131S2 in the second direction (Y-axis direction). In addition, the third holder outer surface 1131S3 may be positioned between the first holder outer surface 1131S1 and the second holder outer surface 1131S2. The third holder outer surface 1131S3 may be the lower surface of the holder 1131. That is, the third holder outer surface 1131S3 may be positioned to face the third housing side portion.

In addition, the third holder outer surface 1131S3 may include a third seating groove 1131S3a. A fifth magnet 1151c may be disposed in the third seating groove 1131S3a. The third holder outer surface 1131S3 may be positioned to face the third housing side portion 1123.

In addition, at least a portion of the third housing hole 1123a may overlap the third seating groove 1131S3a in the first direction (X-axis direction). Therefore, the fifth magnet 1151c in the third seating groove 1131S3a and the fifth coil 1152c in the third housing hole 1123a may be positioned to face each other. In addition, the fifth magnet 1151c and the fifth coil 1152c may generate an electromagnetic force so that the second camera actuator may tilt with respect to a Y axis.

In addition, X-axis tilting may be performed by a plurality of magnets (third and fourth magnets 1151a and 1151b), while Y-axis tilting may be performed by only the fifth magnet 1151c.

In an embodiment, the third seating groove 1131S3a may have a larger area than the first seating groove 1131S1a or the second seating groove 1131S2a. With this configuration, the Y-axis tilting may be performed by current control similar to that of the X-axis tilting.

The fourth holder outer surface 1131S4 may come into contact with the first holder outer surface 1131S1 and the second holder outer surface 1131S2 and may be an outer surface extending from the first holder outer surface 1131S1 and the second holder outer surface 1131S2 in the first direction (X-axis direction). In addition, the fourth holder outer surface 1131S4 may be positioned between the first holder outer surface 1131S1 and the second holder outer surface 1131S2. That is, the fourth holder outer surface 1131S4 may be positioned to face the first member.

The fourth holder outer surface 1131S4 may include a fourth seating groove 1131S4a. The tilting guide part 1141 may be positioned in the fourth seating groove 1131S4a. In addition, the second member 1131a and the first member 1126 may be positioned in the fourth seating groove 1131S4a. In addition, the fourth seating groove 1131S4a may include a plurality of regions. The fourth seating groove 1131S4a may include a first region AR1, a second region AR2, and a third region AR3.

The second member 1131a may be positioned in the first region AR1. That is, the first region AR1 may overlap the second member 1131a in the first direction (X-axis direction). In particular, the first region AR1 may be a region in which the member base part of the second member 1131a is positioned. In this case, the first region AR1 may be positioned on the fourth holder outer surface 1131S4. That is, the first region AR1 may correspond to a region positioned above the fourth seating groove 1131S4a. In this case, the first region AR1 may not be one region in the fourth seating groove 1131S4a.

The first member 1126 may be positioned in the second region AR2. That is, the second region AR2 may overlap the first member 1126 in the first direction (X-axis direction).

In addition, the second region AR2 may be positioned on the fourth holder outer surface 1131S4 like the first region. That is, the second region AR2 may correspond to a region positioned above the fourth seating groove 1131S4a.

The tilting guide part may be positioned in the third region AR3. In particular, the base of the tilting guide part may be positioned in the third region AR3. That is, the third region AR3 may overlap the tilting guide part (e.g., the base) in the first direction (X-axis direction).

In addition, the second region AR2 may be positioned between the first region AR1 and the third region AR3.

In addition, the second member may be disposed in the first region AR1, and the second member 1131a may include the first groove gr1. In an embodiment, the second member 1131a may include the first groove gr1 formed in an inner surface 1131aas. In addition, the second magnet may be disposed in the first groove gr1 as described above.

In addition, as described above, the first member may be disposed in the second region AR2. The first groove gr1 may be positioned to face the second groove gr2. For example, at least a portion of the first groove gr1 may overlap the second groove gr2 in the third direction (Z-axis direction).

In addition, the repulsive force generated by the second magnet may be transmitted to the fourth seating groove 1131S4a of the holder 1131 through the second member. Therefore, the holder may apply a force to the tilting guide part in the same direction as the repulsive force generated by the second magnet.

The first member may include the second groove gr2 facing the first groove gr1 formed in the outer surface thereof. In addition, the first member may include the second protrusion groove formed in the inner surface thereof as described above. In addition, the second protruding portion may be seated in the second protrusion groove.

In addition, like the second magnet, the repulsive force generated by the first magnet and the second magnet may be applied to the first member. Therefore, the first member and the second member may press the tilting guide part disposed between the first member and the holder 1131 through the repulsive force.

The tilting guide part 1141 may be disposed in the third region AR3.

In addition, a first protrusion groove PH1 may be positioned in the fourth seating groove 1131S4a. In addition, the first protruding portion of the tilting guide part 1141 may be received in the first protrusion groove PH1. Therefore, the first protruding portion PR1 may come into contact with the first protrusion groove. A maximum diameter of the first protrusion groove PH1 may correspond to a maximum diameter of the first protruding portion PR1. This may also be applied to the second protrusion groove and the second protruding portion PR2 in the same manner. That is, a maximum diameter of the second protrusion groove may correspond to a maximum diameter of the second protruding portion PR2. Therefore, the second protruding portion may come into contact with the second protrusion groove. With this configuration, first-axis tilting may be easily performed with respect to the first protruding portion, second-axis tilting may be easily performed with respect to the second protruding portion, and a tilting radius can be increased.

In addition, in an embodiment, a plurality of first protrusion grooves PH1 may be provided. For example, one of the first protrusion groove PH1 and the second protrusion groove PH2 may include a 1-1 protrusion groove PH1a and a 1-2 protrusion groove PH1b. Hereinafter, an example in which the first protrusion groove PH1 includes the 1-1 protrusion groove PH1a and the 1-1 protrusion groove PH1b will be described. In addition, the following description may also be applied to the second protrusion groove PH2 in the same manner. For example, the second protrusion groove PH2 may include a 2-1 protrusion groove and a 2-2 protrusion groove, in which the description of the 1-1 protrusion groove may be applied to the 2-1 protrusion groove, and the description of the 1-2 protrusion groove may be applied to the 2-2 protrusion groove.

The 1-1 protrusion groove PH1a and the 1-2 protrusion groove PH1b may be disposed side by side in the first direction (X-axis direction). The 1-1 protrusion groove PH1a and the 1-2 protrusion groove PH1b may have the same maximum area.

The plurality of first protrusion grooves PH1 may have the different number of inclined surfaces. For example, the first protrusion groove PH1 may include a groove lower surface and an inclined surface. In this case, the plurality of protrusion grooves may have the different number of inclined surfaces. In addition, lower surfaces of the protrusion grooves may also have different areas.

For example, the 1-1 protrusion groove PH1a may include a first groove lower surface LS1 and a first inclined surface CS1. The 1-2 protrusion groove PH1b may include a second groove lower surface LS2 and a second inclined surface CS2.

In this case, the first groove lower surface LS1 and the second groove lower surface LS2 may have different areas. The area of the first groove lower surface LS1 may be smaller than the area of the second groove lower surface LS2.

In addition, the number of first inclined surfaces CS1 in contact with the first groove lower surface LS1 may differ from the number of second inclined surfaces CS2. For example, the number of first inclined surfaces CS1 may be more than the number of second inclined surfaces CS2.

With this configuration, it is possible to easily compensate for an assembly tolerance of the first protruding portion seated in the first protrusion groove PH1. For example, since the number of first inclined surfaces CS1 is more than the number of second inclined surfaces CS2, the first protruding portion may come into contact with more inclined surfaces, thereby more accurately maintaining the position of the first protruding portion in the 1-1 protrusion groove PH1a.

Unlike this, the 1-2 protrusion groove PH1b has the number of inclined surfaces in contact with the first protruding portion less than that of 1-1 protrusion groove PH1a, thereby easily adjusting the position of the first protruding portion.

In an embodiment, the second inclined surfaces CS2 may be disposed to be spaced apart from each other in the second direction (Y-axis direction). In addition, the second groove lower surface LS2 may extend in the first direction (X-axis direction) so that the first protruding portion may easily move in the first direction (X-axis direction) while coming into contact with the second inclined surface CS2. That is, the position of the first protruding portion in the 1-2 protrusion groove PH1b may be easily adjusted.

In addition, in the present embodiment, the first region AR1, the second region AR2, and the third region AR3 may have different heights in the first direction (X-axis direction). In an embodiment, the first region AR1 may have a larger height than the second region AR2 and the third region AR3 in the first direction (X-axis direction). Therefore, a stepped portion may be positioned between the first region AR1 and the second region AR2.

In addition, the second member 1131a may include the first groove gr1. That is, the first groove gr1 may be positioned in an inner surface of a member base part 1131aa. In addition, the above-described second magnet may be seated in the first groove gr1. In addition, a plurality of first grooves gr1 may be provided according to the number of second magnets. That is, the number of first grooves gr1 may correspond to the number of second magnets.

In addition, the second member 1131a may include the member base part 1131aa, a first extension 1131ab, and a second extension 1131ac.

The member base part 1131aa may be positioned at the outermost side of the first camera actuator. The member base part 1131aa may be positioned outside the first member. That is, the first member may be positioned between the member base part 1131aa and the tilting guide part.

The first extension 1131ab may extend from an edge of the member base part 1131aa in the third direction (Z-axis direction). That is, the first extension 1131ab may extend from the member base part 1131aa to the holder 1131. It is also applied to the second extension 1131ac in the same manner. In addition, the second extension 1131ac may extend from the edge of the member base part 1131aa in the third direction (Z-axis direction). In an embodiment, the first extension 1131ab and the second extension 1131ac may be positioned at the edge of the member base part 1131aa in the second direction (Y-axis direction). In addition, the first extension 1131ab and the second extension 1131ac may be disposed between an upper member and a lower member.

Therefore, the second member 1131a may have a groove formed by the first extension 1131ab and the second extension 1131ac. That is, the groove may be positioned between the first extension 1131ab and the second extension 1131ac. Therefore, the first extension 1131ab and the second extension 1131ac may be connected by only the member base part 1131aa. With this configuration, the second member 1131a may continuously receive the repulsive force generated by the second magnet seated at the center of the member base part 1131aa, particularly, in the first groove gr1.

In addition, since the second member 1131a is coupled to the holder to move during X-axis tilting and Y-axis tilting, the stiffness of the second member 1131a can be greater than that of the first member.

Furthermore, as described above, the first member according to the embodiment may have the upper member and the lower member, thereby increasing stiffness. With this configuration, it is possible to reduce a difference in the stiffness between the second member and the first member. Therefore, when the second member 1131a and the holder 1131 coupled to the second member 1131a tilt together with respect to the X-axis or the Y-axis, the second member 1131a may have a smaller distance adjacent to the first member and come into contact with the first member. Therefore, since the first member has improved stiffness as described above, its operation can be easily performed. That is, it is possible to improve the reliability of the camera actuator.

Furthermore, since the difference in stiffness between the first member and the second member is reduced, it is possible to minimize damage due to contact during tilting. That is, it is possible to improve the reliability of the camera actuator.

In addition, the first extension 1131ab may be spaced apart from the second extension 1131ac in the second direction (Y-axis direction) to form a separation space. The first member and the tilting guide part may be seated in such a separation space. In addition, the second magnet and the first magnet may be positioned in the separation space.

In addition, the first extension 1131ab and the second extension 1131ac may have the same length in the third direction (Z-axis direction). Therefore, coupling strength, a weight, and the like may be formed in a balanced manner so that the tilting of the holder may be accurately performed without being biased to one side.

In addition, the first extension 1131ab and the second extension 1131ac may be coupled to the holder. In the present specification, it should be understood that coupling may be made through the bonding member other than the above-described protrusion and groove structures. In an embodiment, the first extension 1131ab and the second extension 1131ac may include a third coupling groove 1131k formed in the third direction (Z-axis direction). In addition, a coupling protrusion 1131m may be positioned in a region in which the first extension 1131ab and the second extension 1131ac overlap each other in the third direction (Z-axis direction) in the fourth seating groove 1131S4a. The coupling protrusion 1131m may be positioned to correspond to the third coupling groove 1131k.

For example, the bonding member such as an epoxy may be applied to the third coupling groove 1131k. In addition, the coupling protrusion 1131m may be inserted into the third coupling groove 1131k of the first extension 1131ab and the second extension 1131ac. With this configuration, the second member 1131a may be coupled to the holder 1131. In addition, the repulsive force applied to the second member 1131a may be transmitted to the holder 1131 through such coupling.

However, it should be understood that the positions of the protrusion and groove structures may be interchanged as described above.

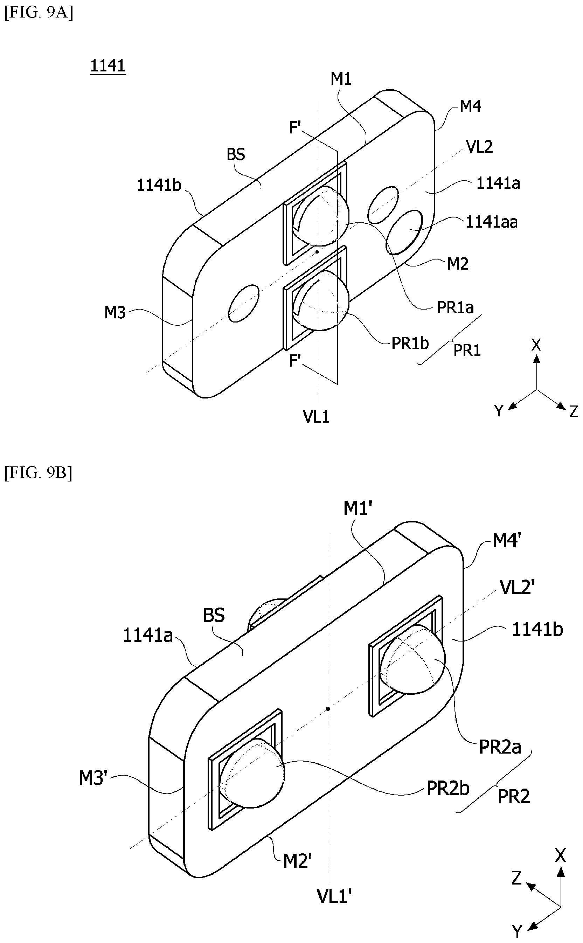

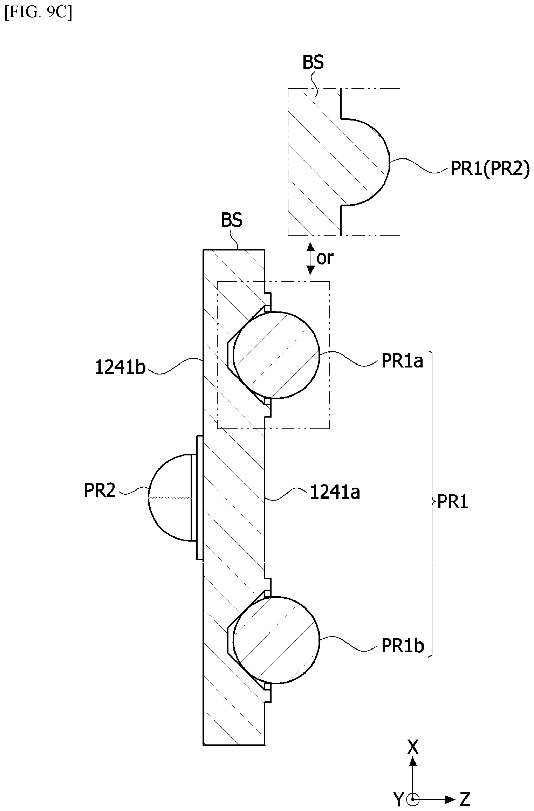

FIG. 9A is a perspective view of a tilting guide part of the first camera actuator according to the embodiment, FIG. 9B is a perspective view of the tilting guide part of the first camera actuator in a different direction from FIG. 9A, and FIG. 9C is a view along line F-F' in FIG. 9A.

The tilting guide part 1141 according to the embodiment may include a base BS, the first protruding portion PR1 protruding from a first surface 1141a of the base BS, and the second protruding portion PR2 protruding from a second surface 1141b of the base BS. In addition, the first protruding portion and the second protruding portion may be formed on opposite surfaces according to the structure, but the present invention will be described below based on the drawings. In addition, it should be understood that the first protruding portion PR1 and the second protruding portion PR2 may be integrally formed with the base BS, and as shown in the drawings, the first protruding portion PR1 and the second protruding portion PR2 may have a spherical shape like a ball. In addition, the first protruding portion PR1 and the second protruding portion PR2 may not be a projection or protrusion shape, but may be a ball.

First, the base BS may include the first surface 1141a and the second surface 1141b facing the first surface 1141a. That is, the first surface 1141a may be spaced apart from the second surface 1141b in the third direction (Z-axis direction), and the first surface 1141a and the second surface 1141b may be outer surfaces opposite to each other or facing each other in the tilting guide part 1141.

The tilting guide part 1141 may include the first protruding portion PR1 extending to one side on the first surface 1141a. According to the embodiment, the first protruding portion PR1 may protrude from the first surface 1141a to the holder. The first protruding portion PR1 may be provided in plural and may include a 1-1 protrusion PR1a and a 1-2 protrusion PR1b.

The 1-1 protrusion PR1a and the 1-2 protrusion PR1b may be positioned side by side in the first direction (X-axis direction). That is, the 1-1 protrusion PR1a and the 1-2 protrusion PR1b may overlap each other in the first direction (X-axis direction). In addition, in an embodiment, the 1-1 protrusion PR1a and the 1-2 protrusion PR1b may be bisected by a virtual line extending in the first direction (X-axis direction).

In addition, each of the 1-1 protrusion PR1a and the 1-2 protrusion PR1b may have a curvature and have, for example, a hemispherical shape. In addition, the 1-1 protrusion PR1a and the 1-2 protrusion PR1b may come into contact with the first groove of the housing at a point which is the farthest from the first surface 1141a of the base BS.

In addition, an align groove 1141aa may be positioned in the first surface 1141a. The align groove 1141aa may be disposed at one side of the first surface 1141a to provide an assembly position or an assembly direction of the tilting guide part 1141 during an assembly process.

In addition, the tilting guide part 1141 may include the second protruding portion PR2 extending to one side on the second surface 1141b. According to the embodiment, the second protruding portion PR2 may protrude from the second surface 1141b to the housing. In addition, the second protruding portion PR2 may be provided in plural and may include a 2-1 protrusion PR2a and a 2-2 protrusion PR2b in the embodiment.

The 2-1 protrusion PR2a and the 2-2 protrusion PR2b may be positioned side by side in the second direction (Y-axis direction). That is, the 2-1 protrusion PR2a and the 2-2 protrusion PR2b may overlap each other in the second direction (Y-axis direction). In addition, in an embodiment, the 2-1 protrusion PR2a and the 2-2 protrusion PR2b may be bisected by a virtual line extending in the second direction (Y-axis direction).

Each of the 2-1 protrusion PR2a and the 2-2 protrusion PR2b may have a curvature and have, for example, a hemispherical shape. In addition, the 2-1 protrusion PR2a and the 2-2 protrusion PR2b may come into contact with the second member 113 1a at a point which is spaced apart from the second surface 1141b of the base BS.

The 1-1 protrusion PR1a and the 1-2 protrusion PR1b may be positioned in a region between the 2-1 protrusion PR2a and the 2-2 protrusion PR2b in the second direction. According to the embodiment, the 1-1 protrusion PR1a and the 1-2 protrusion PR1b may be positioned at the center of a separation space between the 2-1 protrusion PR2a and the 2-2 protrusion PR2b in the second direction. With this configuration, the actuator according to the embodiment may have an angle of the X-axis tilting in the same range with respect to the X-axis. That is, the tilting guide part 1141 and the holder may equally provide a range (e.g., a positive/negative range) in which the X-axis tilting may be performed with respect to the 1-1 protrusion PR1a and the 1-2 protrusion PR1b with respect to the X-axis.

In addition, the 2-1 protrusion PR2a and the 2-2 protrusion PR2b may be positioned in a region between the 1-1 protrusion PR1a and the 1-2 protrusion PR1b in the first direction. According to the embodiment, the 2-1 protrusion PR2a and the 2-2 protrusion PR2b may be positioned at the center of a separation space between the 1-1 protrusion PR1a and the 1-2 protrusion PR1b in the first direction. With this configuration, the actuator according to the embodiment may have an angle of the Y-axis tilting in the same range with respect to the Y-axis. That is, the tilting guide part 1141 and the holder may equally provide a range (e.g., a positive/negative range) in which the Y-axis tilting may be performed with respect to the 2-1 protrusion PR2a and the 2-2 protrusion PR2b with respect to the Y-axis.

Specifically, the first surface 1141a may include a first outer line M1, a second outer line M2, a third outer line M3, and a fourth outer line M4. The first outer line M1 and the second outer line M2 may face each other, and the third outer line M3 and the fourth outer line M4 may face each other. In addition, the third outer line M3 and the fourth outer line M4 may be positioned between the first outer line M1 and the second outer line M2. In addition, although the first outer line M1 and the second outer line M2 may be perpendicular to the first direction (X-axis direction), the third outer line M3 and the fourth outer line M4 may be parallel to the first direction (X-axis direction).

In this case, the first protruding portion PR1 may be positioned on a first virtual line VL1. Here, the first virtual line VL1 is a line that bisects the first outer line M1 and the second outer line M2. Alternatively, the first and third virtual lines VL1 and VL1' are lines that bisect the base BS in the second direction (Y-axis direction). Therefore, the tilting guide part 1141 may easily perform the X-axis tilting through the first protruding portion PR1. In addition, since the tilting guide part 1141 performs the X-axis tilting with respect to the first virtual line VL1, a rotational force may be uniformly applied to the tilting guide part 1141. Therefore, it is possible to precisely perform the X-axis tilting and improve the reliability of the device.

In addition, the 1-1 protrusion PR1a and the 1-2 protrusion PR1b may be symmetrically disposed with respect to the first virtual line VL1 and a second virtual line VL2. Alternatively, the 1-1 protrusion PR1a and the 1-2 protrusion PR1b may be symmetrically positioned with respect to a first central point C1. With this configuration, during the X-axis tilting, support strength supported by the first protruding portion PR1 may be equally applied to upper and lower sides with respect to the second virtual line VL2. Therefore, it is possible to improve the reliability of the tilting guide part. Here, the second virtual line VL2 is a line which bisects the third outer line M3 and the fourth outer line M4. Alternatively, the second and fourth virtual lines VL2 and VL2' are lines which bisect the base BS in the first direction (X-axis direction).

In addition, the first central point C1 may be an intersection of the first virtual line VL1 and the second virtual line VL2. Alternatively, the first central point may be a point corresponding to the center of gravity according to the shape of the tilting guide part 1141.

In addition, the second surface 1141b may include a fifth outer line M1', a sixth outer line M2', a seventh outer line M3', and an eighth outer line M4'. The fifth outer line M1' and the sixth outer line M2' may face each other, and the seventh outer line M3' and the eighth outer line M4' may face each other. In addition, the seventh outer line M3' and the eighth outer line M4' may be positioned between the fifth outer line M1' and the sixth outer line M2'. In addition, the fifth outer line M1' and the sixth outer line M2' may be perpendicular to the first direction (X-axis direction), but the seventh outer line M3' and the eighth outer line M4' may be parallel to the first direction (X-axis direction).

In addition, since the tilting guide part 1141 performs the Y-axis tilting with respect to the fourth virtual line VL2', a rotational force may be uniformly applied to the tilting guide part 1141. Therefore, it is possible to precisely the Y-axis tilting and improve the reliability of the device.

In addition, the 2-1 protrusion PR2a and the 2-2 protrusion PR2b may be symmetrically disposed on the fourth virtual line VL2' with respect to the third virtual line VL1'. Alternatively, the 2-1 protrusion PR2a and the 2-2 protrusion PR2b may be symmetrically positioned with respect to a second central point C1'. With this configuration, during the Y-axis tilting, support strength supported by the second protruding portion PR2 may be equally applied to upper and lower sides with respect to the fourth virtual line VL2'. Therefore, it is possible to improve the reliability of the tilting guide part. Here, the third virtual line VL1' is a line that bisects the fifth outer line M1' and the sixth outer line M2'. In addition, the second central point C1' may be an intersection of the third virtual line VL1' and the fourth virtual line VL2'. Alternatively, the first central point may be a point corresponding to the center of gravity according to the shape of the tilting guide part 1141.

In addition, a distance DR2 between the 1-1 protrusion PR1a and the 1-2 protrusion PR1b in the first direction (X-axis direction) may be greater than a length of the second protruding portion PR2 in the first direction (X-axis direction). Therefore, when the X-axis tilting is performed with respect to the 1-1 protrusion PR1a and the 1-2 protrusion PR1b, it is possible to minimize resistance due to the second protruding portion PR2.

Correspondingly, a distance ML2 between the 2-1 protrusion PR2a and the 2-2 protrusion PR2b in the second direction (Y-axis direction) may be greater than a length of the first protruding portion PR1 in the second direction (Y-axis direction). Therefore, when the Y-axis tilting is performed with respect to the 2-1 protrusion PR2a and the 2-2 protrusion PR2b, it is possible to minimize resistance due to the first protruding portion PR1.

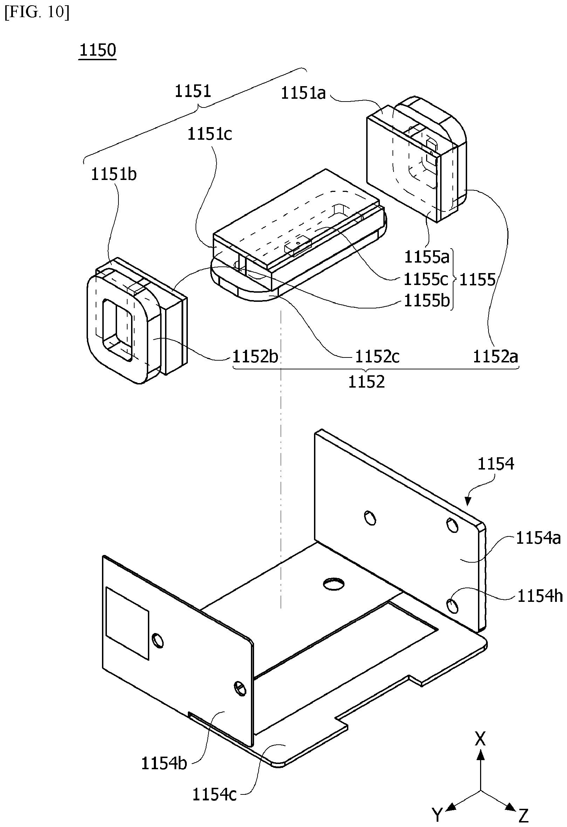

FIG. 10 is a view showing a first driving part of the first camera actuator according to the embodiment.

Referring to FIG. 10, a first driving part 1150 includes the driving magnet 1151, the driving coil 1152, the Hall sensor part 1153, the first board part 1154, and the yoke part 1155.

In addition, as described above, the driving magnet 1151 may include the third magnet 1151a, the fourth magnet 1151b, and the fifth magnet 1151c, which provide a driving force generated by an electromagnetic force. The third magnet 1151a, the fourth magnet 1151b, and the fifth magnet 1151c may each be positioned on the outer surface of the holder 1131.

In addition, the driving coil 1152 may include a plurality of coils. In an embodiment, the driving coil 1152 may include the third coil 1152a, the fourth coil 1152b, and the fifth coil 1152c.

The third coil 1152a may be positioned to face the third magnet 1151a. Therefore, the third coil 1152a may be positioned in the first housing hole 1121a of the first housing side portion 1121 as described above. In addition, the fourth coil 1152b may be positioned to face the fourth magnet 1151b. Therefore, the fourth coil 1152b may be positioned in the second housing hole 1122a of the second housing side portion 1122 as described above.

The second camera actuator according to the embodiment may control the mover 1130 to rotate along the first axis (in the X-axis direction) or the second axis (in the Y-axis direction) by the electromagnetic force between the driving magnet 1151 and the driving coil 1152, thereby minimizing the occurrence of a decentering or tilting phenomenon and providing the best optical characteristics upon implementing an OIS.

In addition, according to the embodiment, it is possible to provide an ultra-slim and ultra-small camera actuator and the camera module including the same by implementing the OIS through the tilting guide part 1141 of the rotating part 1140 disposed between the first housing 1120 and the mover 1130 to resolve the size limitation of the actuator.

The first board part 1154 may include a first board side portion 1154a, a second board side portion 1154b, and a third board side portion 1154c.

The first board side portion 1154a and the second board side portion 1154b may be disposed to face each other. In addition, the third board side portion 1154c may be positioned between the first board side portion 1154a and the second board side portion 1154b.

In addition, the first board side portion 1154a may be positioned between the first housing side portion and the shield can, and the second board side portion 1154b may be positioned between the second housing side portion and the shield can. In addition, the third board side portion 1154c may be positioned between the third housing side portion and the shield can and may be a lower surface of the first board part 1154.

The first board side portion 1154a may be coupled to and electrically connected to the third coil 1152a. In addition, the first board side portion 1154a may be coupled to and electrically connected to a first Hall sensor 1153a.

The second board side portion 1154b may be coupled to and electrically connected to the fourth coil 1152b. In addition, it should be understood that the second board side portion 1154b may be coupled to and electrically connected to the first Hall sensor.

The third board side portion 1154c may be coupled to and electrically connected to the fifth coil 1152c. In addition, the third board side portion 1154c may be coupled to and electrically connected to a second Hall sensor 1153b.

The yoke part 1155 may include a third yoke 1155a, a fourth yoke 1155b, and a fifth yoke 1155c. The third yoke 1155a may be positioned in the first seating groove and coupled to the third magnet 1151a. In addition, the fourth yoke 1155b may be positioned in the second seating groove and coupled to the fourth magnet 1151b. In addition, the fifth yoke 1155c may be positioned in the third seating groove and coupled to the fifth magnet 1151c. The third to fifth yokes 1155a to 1155c are coupled to the housing by the third to the fifth magnets 1151a to 1151c easily seated in the first to third seating grooves.

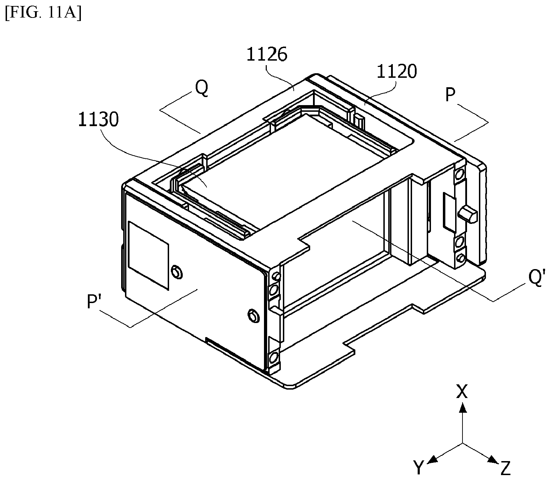

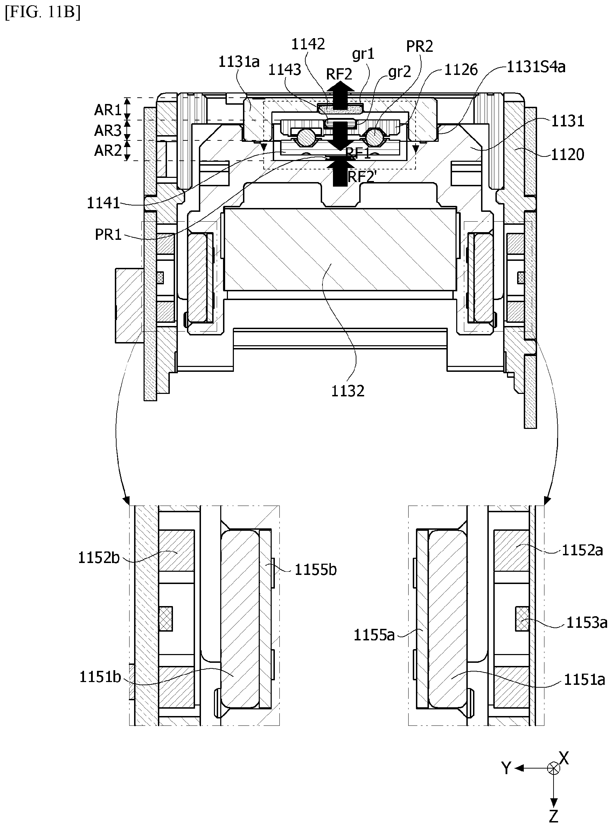

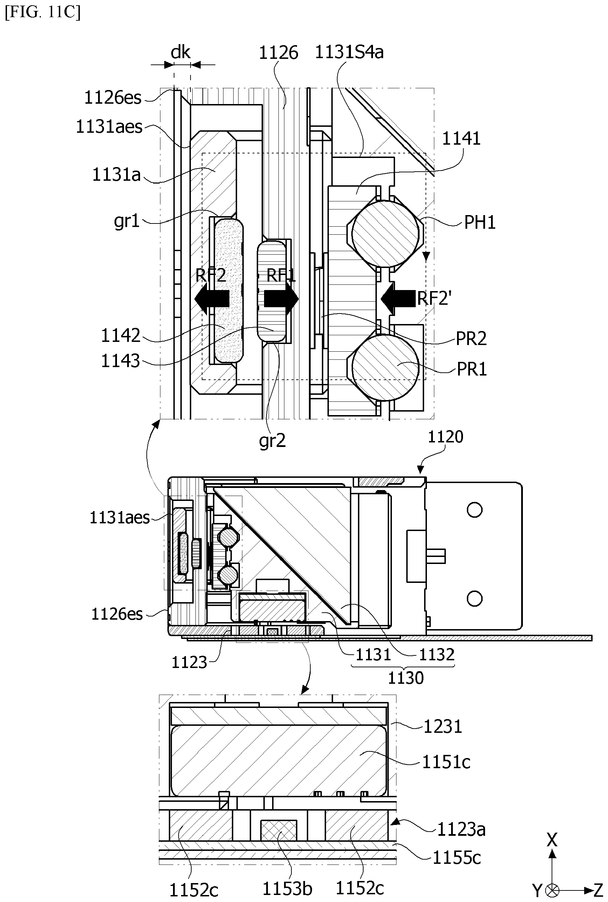

FIG. 11A is a perspective view of the first camera actuator according to the embodiment, FIG. 11B is a view along line P-P' in FIG. 11A, and FIG. 11C is a view along line Q-Q' in FIG. 11A.

Referring to FIGS. 11A to 11C, the third coil 1152a may be positioned on the first housing side portion 1121, and the third magnet 1151a may be positioned on the first holder outer surface 1131S1 of the holder 1131. Therefore, the third coil 1152a and the third magnet 1151a may be positioned to face each other. At least a portion of the third magnet 1151a may overlap the third coil 1152a in the second direction (Y-axis direction).

In addition, the fourth coil 1152b may be positioned on the second housing side portion 1122, and the fourth magnet 1151b may be positioned on the second holder outer surface 1131S2 of the holder 1131. Therefore, the fourth coil 1152b and the fourth magnet 1151b may be positioned to face each other. At least a portion of the fourth magnet 1151b may overlap the fourth coil 1152b in the second direction (Y-axis direction).

In addition, the third coil 1152a and the fourth coil 1152b may overlap each other in the second direction (Y-axis direction), and the third magnet 1152a and the fourth magnet 1151b may overlap each other in the second direction (Y-axis direction).

With this configuration, the electromagnetic force applied to the outer surfaces of the holder (the first holder outer surface and the second holder outer surface) may be positioned on parallel axes in the second direction (Y-axis direction) to allow the X-axis tilting to be performed accurately and precisely.

In addition, the second protruding portion PR2a and PR2b of the tilting guide part 1141 may come into contact with the first member 1126 of the first housing 1120. The second protruding portion PR2 may be seated in the second protrusion groove PH2 formed in one side surface of the first member 1126. In addition, during the X-axis tilting, the second protruding portion PR2a and PR2b may be a reference axis (or a rotational axis) of the tilting. Therefore, the tilting guide part 1141 and the mover 1130 may move in the second direction.

In addition, as described above, the first Hall sensor 1153a may be positioned outside to be electrically connected and coupled to the first board part 1154. However, the present invention is not limited to such a position.

In addition, the fifth coil 1152c may be positioned on the third housing side portion 1123, and the fifth magnet 1151c may be positioned on the third holder outer surface 1131S3 of the holder 1131. At least portions of the fifth coil 1152c and the fifth magnet 1151c may overlap each other in the first direction (X-axis direction). Therefore, the strength of the electromagnetic force between the fifth coil 1152c and the fifth magnet 1151c may be easily controlled.

As described above, the tilting guide part 1141 may be positioned on the fourth holder outer surface 1131S4 of the holder 1131. In addition, the tilting guide part 1141 may be seated in the fourth seating groove 1131S4a of the fourth holder outer surface. As described above, the fourth seating groove 1131S4a may include the first region AR1, the second region AR2, and the third region AR3.

The second member 1131a may be disposed in the first region AR1, and the second member 1131a may include the first groove gr1 formed in the inner surface of the second member 1131a. In addition, the second magnet 1142 may be disposed in the first groove gr1 as described above, and a repulsive force RF2 generated by the second magnet 1142 may be transmitted to the fourth seating groove 1131S4a of the holder 1131 through the second member 1131a (RF2'). Therefore, the holder 1131 may apply a force to the tilting guide part 1141 in the same direction as the repulsive force RF2 generated by the second magnet 1142.

The first member 1126 may be disposed in the second region AR2. The first member 1126 may include the second groove gr2 facing the first groove gr1. In addition, the first member 1126 may include the second protrusion groove PH2 disposed in a surface corresponding to the second groove gr2. In addition, a repulsive force RF1 generated by the first magnet 1143 may be applied to the first member 1126. Therefore, the first member 1126 and the second member 1131a may press the tilting guide part 1141 disposed between the first member 1126 and the holder 1131 through the generated the repulsive forces RF1 and RF2'. Therefore, even after the holder tilts with respect to the X-axis or the Y-axis by a current applied to the third and fourth coils or the fifth coil 1152c, the coupling between the holder 1131, the first housing 1120, and the tilting guide part 1141 can be maintained.

The tilting guide part 1141 may be disposed in the third region AR3. As described above, the tilting guide part 1141 may include the first protruding portion PR1 and the second protruding portion PR2. In this case, the first protruding portion PR1 and the second protruding portion PR2 may be disposed on the second surface 1141b and the first surface 1141a of the base BS, respectively. As described above, even in other embodiments described below, the first protruding portion PR1 and the second protruding portion PR2 may be positioned on facing surfaces of the base BS in various ways.

The first protrusion groove PH1 may be positioned in the fourth seating groove 1131S4a. In addition, the first protruding portion PR1 of the tilting guide part 1141 may be received in the first protrusion groove PH1. Therefore, the first protruding portion PR1 may come into contact with the first protrusion groove PH1. A maximum diameter of the first protrusion groove PH1 may correspond to a maximum diameter of the first protruding portion PR1. It may also be applied to the second protrusion groove PH2 and the second protruding portion PR2 in the same manner. That is, a maximum diameter of the second protrusion groove PH2 may correspond to a maximum diameter of the second protruding portion PR2. In addition, the second protruding portion PR2 may come into contact with the second protrusion groove PH2. With this configuration, the first-axis tilting may be easily performed with respect to the first protruding portion PR1, the second-axis tilting may be easily performed with respect to the second protruding portion PR2, and the tilting radius can be increased.

In addition, since the tilting guide part 1141 may be disposed side by side with the second member 1131a and the first member 1126 in the third direction (Z-axis direction), the tilting guide part 1141 may overlap the optical member 1132 in the first direction (X-axis direction). More specifically, in an embodiment, the first protruding portion PR1 may overlap the optical member 1132 in the first direction (X-axis direction). Furthermore, at least a portion of the first protruding portion PR1 may overlap the fifth coil 1152c or the fifth magnet 1151c in the first direction (X-axis direction). That is, in the camera actuator according to the embodiment, each protruding portion, which is the central axis of the tilting, may be positioned adjacent to the center of gravity of the mover 1130. Therefore, the tilting guide part may be positioned adjacent to the center of gravity of the holder. Therefore, the camera actuator according to the embodiment can minimize a moment value at which the holder tilts and also minimize the consumption of the current applied to the coil unit or the like to tilt the holder, thereby minimizing power consumption and improving the reliability of the device.

In addition, the second magnet 1142 and the first magnet 1143 may not overlap the fifth coil 1152c or the optical member 1132 in the first direction (X-axis direction). That is, in an embodiment, the second magnet 1142 and the first magnet 1143 may be disposed to be spaced apart from the fifth coil 1152c or the optical member 1132 in the third direction (Z-axis direction). Therefore, it is possible to minimize the magnetic force transmitted from the second magnet 1142 and the first magnet 1143 to the fifth coil 1152c. Therefore, the camera actuator according to the embodiment may easily perform vertical driving (Y-axis tilting) and can minimize power consumption.

Furthermore, as described above, the second Hall sensor 1153b positioned inside the fifth coil 1153c may detect a change in magnetic flux, and thus perform position sensing between the fifth magnet 1151c and the second Hall sensor 1153b. In this case, an offset voltage of the second Hall sensor 1153b may be changed depending on the influence of the magnetic field generated from the second magnet 1142 and the first magnet 1143.

The first camera actuator according to the embodiment may include the second member 1131a, the second magnet 1142, the first magnet 1143, the first member 1126, the tilting guide part 1141, and the holder 1131, which are disposed sequentially. However, since the second magnet is positioned in the second member and the first magnet is positioned in the first member, the second member, the first member, the tilting guide part, and the holder may be disposed sequentially.

In addition, in an embodiment, separation distances of the second magnet 1142 and the first magnet 1143 from the holder 1131 (or the optical member 1132) in the third direction may be greater than a separation distance from the tilting guide part 1141. Therefore, the second Hall sensor 1153b under the holder 1131 may also be disposed to be spaced a predetermined distance from the second magnet 1142 and the first magnet 1143. Therefore, it is possible to minimize the influence of the magnetic field generated by the second magnet 1142 and the first magnet 1143 on the second Hall sensor 1153b, thereby preventing the Hall voltage from being saturated by being concentrated to a positive or negative value. That is, such a configuration may allow a Hall electrode to have a range in which Hall calibration may be performed. Furthermore, a temperature also affects the electrode of the Hall sensor, and resolution power of a camera lens varies depending on the temperature, but in the embodiment, it is possible to prevent the case in which the Hall voltage is concentrated to the positive or negative value to compensate for the resolution power of the lens correspondingly, thereby easily preventing the degradation of the resolution power.

In addition, a circuit for compensating the offset with respect to the output (i.e., the Hall voltage) of the second Hall sensor 1153b may also be easily designed.

In addition, according to the embodiment, some regions of the tilting guide part 1141 may be positioned outside the fourth holder outer surface more than the fourth holder outer surface of the holder 1131.

The tilting guide part 1141 may be seated in the fourth seating groove 1131S4a with respect to the base BS, excluding the first protruding portion PR1 and the second protruding portion PR2. That is, a length of the base BS in the third direction (Z-axis direction) may be smaller than a length of the fourth seating groove 1131S4a in the third direction (Z-axis direction). With this configuration, it is possible to easily realize miniaturization.

In addition, a maximum length of the tilting guide part 1141 in the third direction (Z-axis direction) may be greater than a length of the fourth seating groove 1131S4a in the third direction (Z-axis direction). Therefore, as described above, an end of the second protruding portion PR2 may be positioned between the fourth holder outer surface and the first member 1126. That is, at least a portion of the second protruding portion PR2 may be positioned in a direction opposite to the third direction (Z-axis direction) more than the holder 1131. That is, the holder 1131 may be spaced a predetermined distance from the end (portion in contact with the second protrusion groove) of the second protruding portion PR2 in the third direction (Z-axis direction).

In addition, a front surface 1131aes of the second member 1131a according to the embodiment may be spaced apart from a front surface 1126es of the first member 1126. In particular, the front surface 1131aes of the second member 1131a according to the embodiment may be positioned in the third direction (Z-axis direction) from the front surface 1126es of the first member 1126. Alternatively, the front surface 1131aes of the second member 1131a according to the embodiment may be positioned inside the front surface 1126es of the first member 1126. To this end, the first member 1126 may have an inward extending and bent structure. In addition, some regions of the second member 1131a may be positioned in a groove formed by the above-described extending and bent structure of the first member 1126.

With this configuration, since the second member 1131a is positioned inside the first member 1126, it is possible to increase space efficiency and realize miniaturization. Furthermore, even when the driving (tilting or rotation of the mover 1130) by the electromagnetic force is performed, the second member 1131a does not protrude outward from the first member 1126, and thus it is possible to block contact with nearby devices. Therefore, it is possible to improve the reliability.

In addition, a predetermined separation space may be present between the second magnet 1142 and the first magnet 1143. That is, the second magnet 1142 and the first magnet 1143 may face each other with the same polarity.

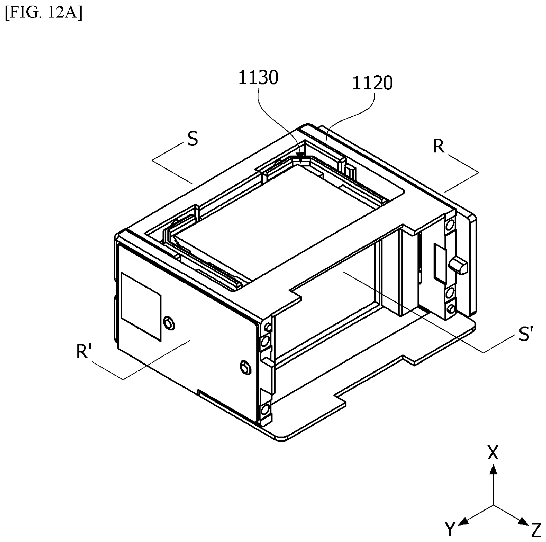

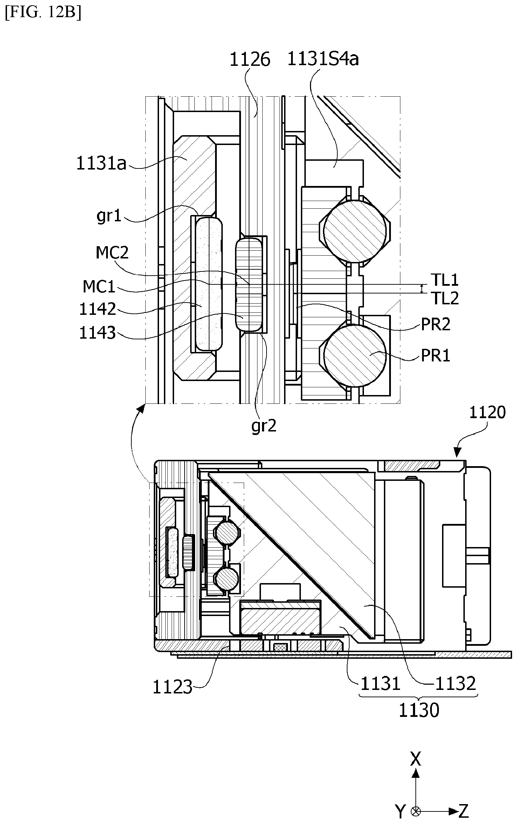

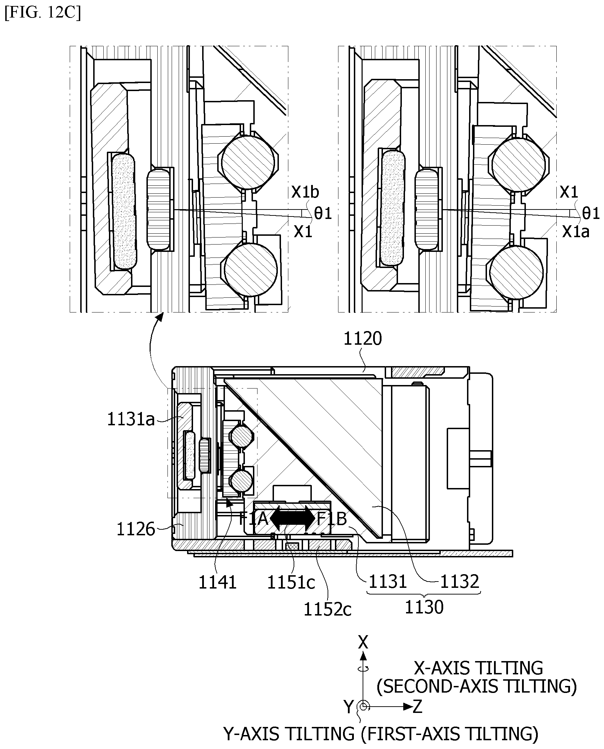

FIG. 12A is a perspective view of the first camera actuator according to the embodiment, FIG. 12B is a view along line S-S' in FIG. 12A, and FIG. 12C is an exemplary view showing a movement of the first camera actuator shown in FIG. 12B.

Referring to FIGS. 12A to 12C, the Y-axis tilting may be performed by the first camera actuator according to the embodiment. That is, OIS may be implemented by rotating the first camera actuator in the first direction (X-axis direction).

In an embodiment, the fifth magnet 1151c disposed under the holder 1131 may generate the electromagnetic force with the fifth coil 1152c to tilt or rotate the mover 1130 with respect to the second direction (Y-axis direction).

Specifically, the repulsive force between the second magnet 1142 and the first magnet 1143 may be transmitted to the second member 1131a and the first member 1126 and finally transmitted to the tilting guide part 1141 disposed between the first member 1126 and the holder 1131. Therefore, the tilting guide part 1141 may be pressed by the mover 1130 and the first housing 1120 by the above-described repulsive force.

In addition, the second protruding portion PR2 may be supported by the first member 1126. In this case, in an embodiment, the tilting guide part 1141 may rotate or tilt with respect to the second protruding portion PR2 protruding toward the first member 1126, which is the reference axis (or the rotational axis), that is, with respect to the second direction (Y-axis direction). That is, the tilting guide part 1141 may rotate or tilt with respect to the second protruding portion PR2 protruding toward the first member 1126 in the first direction (X-axis direction), which is the reference axis (or the rotational axis).

For example, OIS may be implemented by rotating (X1→X1a) the mover 1130 at a first angle θ1 in the X-axis direction by first electromagnetic forces F1A and F1B between the fifth magnet 1151c disposed in the third seating groove and the fifth coil 1152c disposed on the third board side portion.

Conversely, OIS may be implemented by rotating (X1→X1b) the mover 1130 at the first angle θ1 in a direction opposite to the X-axis direction by the first electromagnetic forces F1A and F1B between the fifth magnet 1151c disposed in the third seating groove and the fifth coil 1152c disposed on the third board side portion.

The first angle θ1 may range from ±1° to ±3°. However, the present invention is not limited thereto.

Hereinafter, in the first camera actuators according to various embodiments, the electromagnetic force may move the mover by generating a force in the described direction or move the mover in the described direction even when a force is generated in another direction. That is, the described direction of the electromagnetic force is a direction of the force generated by the magnet and the coil to move the mover. For example, the first electromagnetic forces F1A and F1B may act in a third direction or in a direction opposite to the third direction.

In addition, a center MC1 of the second magnet 1142 and a center MC2 of the first magnet 1143 may be disposed side by side in the third direction (Z-axis direction). That is, a center line TL1 connecting the center MC1 of the second magnet 1142 to the center MC2 of the first magnet 1143 may be parallel to the third direction (Z-axis direction).

In addition, a bisector TL2 that bisects the second protruding portion PR2 and corresponds to the third direction (Z-axis direction) may be parallel to the center line TL1. That is, the bisector TL2 may be a line that bisects the second protruding portion PR2 in the first direction (X-axis direction), and a plurality of bisectors TL2 may be provided.

In an embodiment, the bisector TL2 may be disposed to be spaced apart from the center line TL1 in the first direction (X-axis direction). The bisector TL2 may be positioned above the center line TL1. With this configuration, since the separation distance between the fifth coil 1152c and the fifth magnet 1151c may be increased, the holder can more accurately perform two axes tilting. Furthermore, when a current is not applied to the coil, the position of the holder can be maintained equally.

More specifically, since the center MC1 of the second magnet 1142 and the center MC2 of the first magnet 1143 are spaced apart from the bisector TL2 in the first direction (X-axis direction), the force (e.g., the repulsive force) between the second magnet 1142 and the first magnet 1143 may act at a distance spaced apart from the bisector TL2 corresponding to the optical axis in the first direction (X-axis direction). In addition, a momentum is generated in the mover 1130 by such a force. However, when the center MC1 of the second magnet 1142 and the center MC2 of the first magnet 1143 are positioned on the bisector TL2, there is a problem that during the execution of the calibration, the positions of the tilting guide part and the second magnet 1142 are not maintained after tilting. That is, in the camera actuator according to the embodiment, since the center MC1 of the second magnet 1142 and the center MC2 of the first magnet 1143 are not disposed on the bisector TL2, the positions of the tilting guide part and the second magnet 1142 may be maintained after tilting or rotating.

In another embodiment, the center MC1 of the second magnet 1142 and the center MC2 of the first magnet 1143 may be disposed to be spaced apart from each other in the first direction (X-axis direction).

In addition, the center MC1 of the second magnet 1142 and the center MC2 of the first magnet 1143 may not be positioned on the bisector TL2. For example, the center MC1 of the second magnet 1142 and the center MC2 of the first magnet 1143 may be positioned above the bisector TL2.

Therefore, since the separation distance between the fifth coil 1152c and the fifth magnet 1151c increases, the holder may more accurately perform two axes tilting. Furthermore, when a current is not applied to the coil, the position of the holder may be equally maintained.

In addition, the second magnet 1142 and the first magnet 1143 may have different lengths in the first direction (X-axis direction).

In an embodiment, the area of the second magnet 1142 coupled to the second member 1131a and tilting together with the mover 1130 may be greater than the area of the first magnet 1143. For example, the length of the second magnet 1142 in the first direction (X-axis direction) may be greater than the length of the first magnet 1143 in the first direction (X-axis direction). In addition, the length of the second magnet 1142 in the second direction (Y-axis direction) may be greater than a length of the first magnet 1143 in the second direction (Y-axis direction). In addition, the first magnet 1143 may be positioned in a virtual linear line extending both ends of the second magnet 1142 in the third direction.

With this configuration, even when the magnet at one side (e.g., the second magnet) tilts upon tilting or rotating, it is possible to easily prevent forces other than the vertical force from being generated by the tilting. That is, even when the second magnet vertically tilts together with the mover 1130, the second magnet may not receive a force (e.g., a repulsive force or an attractive force) against the tilting from the first magnet 1143. Therefore, it is possible to increase driving efficiency.

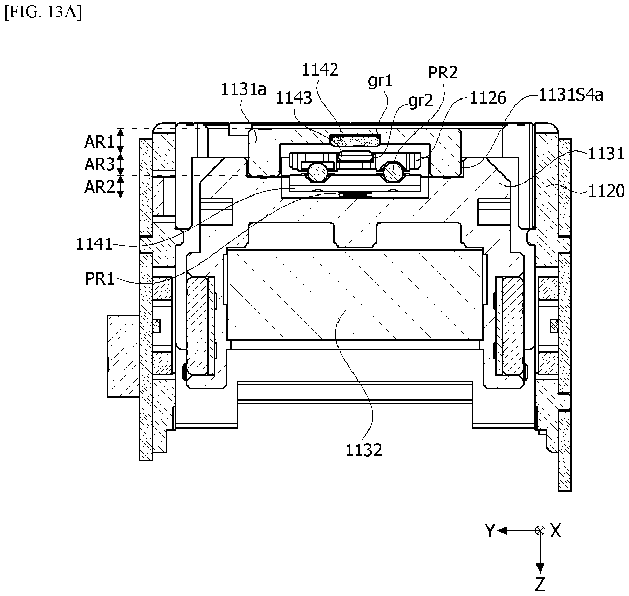

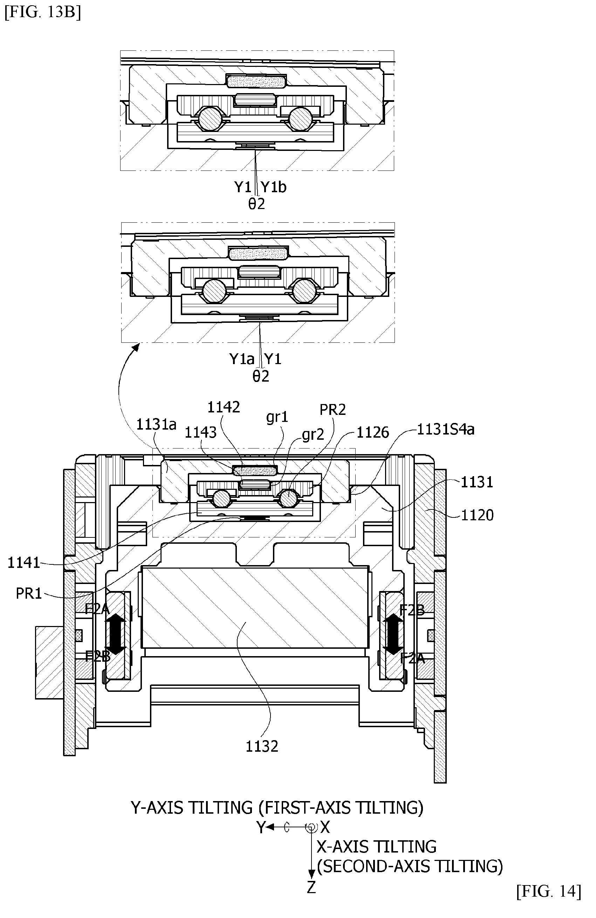

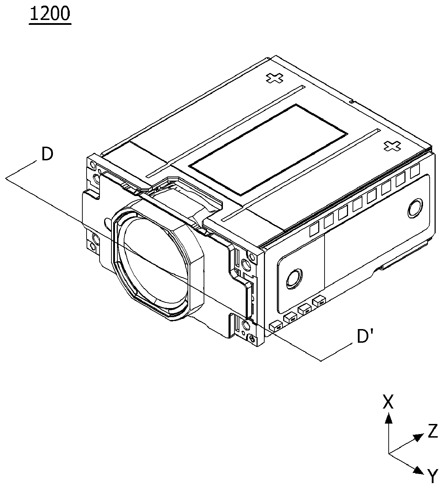

FIG. 13A is a view along line R-R' in FIG. 12A, and FIG. 13B is an exemplary view of a movement of the first camera actuator shown in FIG. 13A.

Referring to FIGS. 13A and 13B, X-axis tilting may be performed. That is, OIS may be implemented by tilting or rotating the mover 1130 in the Y-axis direction.

In an embodiment, the third magnet 1151a and the fourth magnet 1151b disposed on the holder 1131 may respectively generate the electromagnetic force with the third coil 1152a and the fourth coil 1152b and tilt or rotate the tilting guide part 1141 and the mover 1130 with respect to the first direction (X-axis direction).

Specifically, the repulsive force between the second magnet 1142 and the first magnet 1143 may be transmitted to the first member 1126 and the holder 1131 and finally transmitted to the tilting guide part 1141 disposed between the holder 1131 and the first member 1126. Therefore, the tilting guide part 1141 may be pressed by the mover 1130 and the first housing 1120 by the above-described repulsive force.

In addition, the 1-1 protrusion PR1a and the 1-2 protrusion PR1b may be spaced apart from each other in the first direction (X-axis direction) and supported by the first protrusion groove PH1 formed in the fourth seating groove 1131S4a of the holder 1131. In addition, in an embodiment, the tilting guide part 1141 may rotate or tilt with respect to the first protruding portion PR1 protruding toward the holder 1131 (e.g., in the third direction), which is the reference axis (or the rotational axis), that is, with respect to the first direction (X-axis direction).

For example, OIS may be implemented by rotating (Y1→Y1a) the mover 1130 at a second angle θ2 in the Y-axis direction by second electromagnetic forces F2A and F2B between the first and second magnets 1151a and 1151b disposed in the first seating groove and the first and second coils 1152a and 1152b disposed on the first and second board side portions. In addition, OIS may be implemented by rotating (Y1→Y1b) the mover 1130 at the second angle θ2 in the Y-axis direction by the second electromagnetic forces F2A and F2B between the first and second magnets 1151a and 1151b disposed in the first seating groove and the first and second coils 1152a and 1152b disposed on the first and second board side portions. The second angle θ2 may range from ±1° to 3°. However, the present invention is not limited thereto.

In addition, as described above, the electromagnetic forces generated by the third and fourth magnets 1151a and 1151b and the third and fourth coils 1152a and 1152b may act in the third direction or in a direction opposite to the third direction. For example, the electromagnetic force may be generated on a left side portion of the mover 1130 in the third direction (Z-axis direction) and may act on a right side portion of the mover 1130 in a direction opposite to the third direction (Z-axis direction). Therefore, the mover 1130 may rotate with respect to the first direction. Alternatively, the mover 130 may move in the second direction.

As described above, the second camera actuator according to the embodiment may control the mover 1130 to rotate in the first direction (X-axis direction) or the second direction (Y-axis direction) by the electromagnetic force between the driving magnet in the holder and the driving coil disposed in the first housing, thereby minimizing the occurrence of a decentering or tilting phenomenon and providing the best optical characteristics upon implementing the OIS. In addition, as described above, "Y-axis tilting" is rotation or tilting in the first direction (X-axis direction), and "X-axis tilting" is rotation or tilting in the second direction (Y-axis direction).

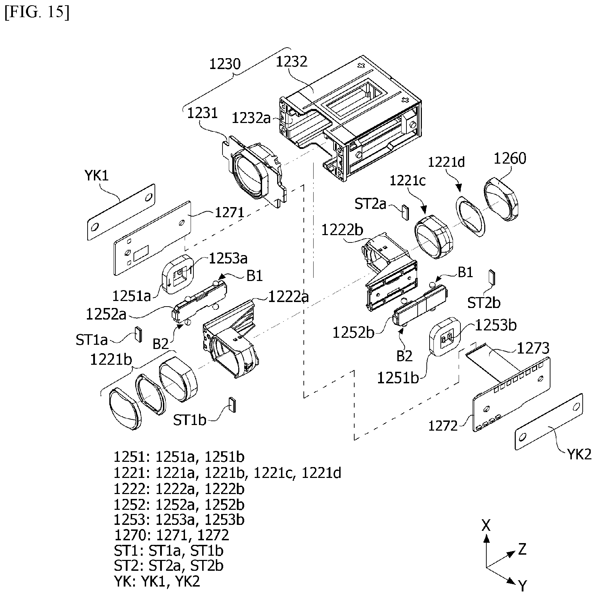

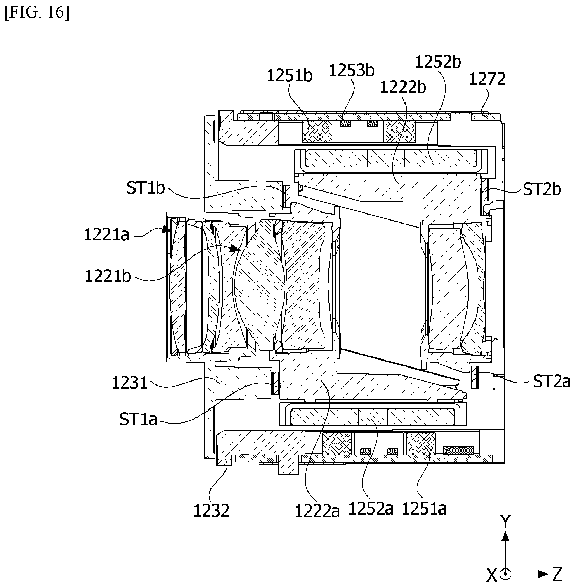

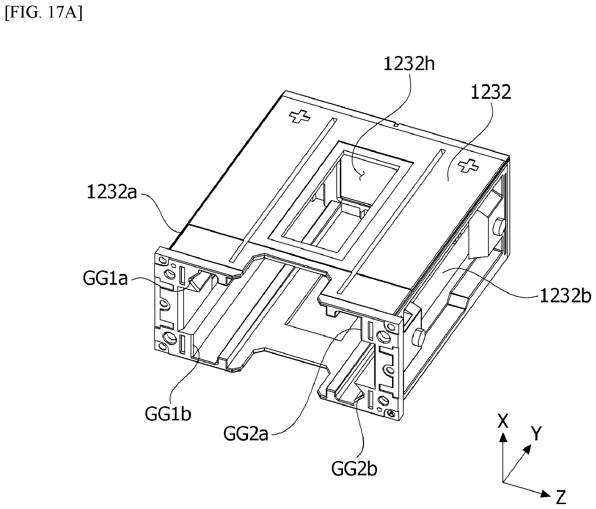

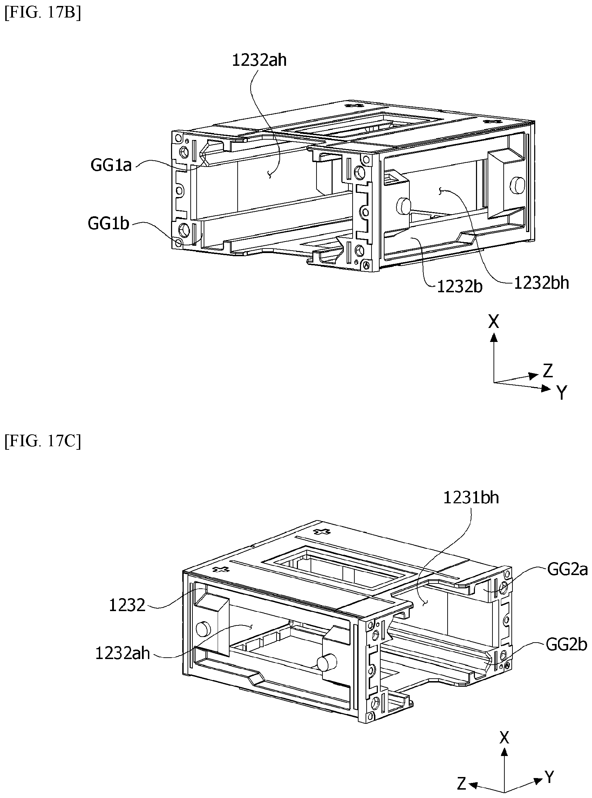

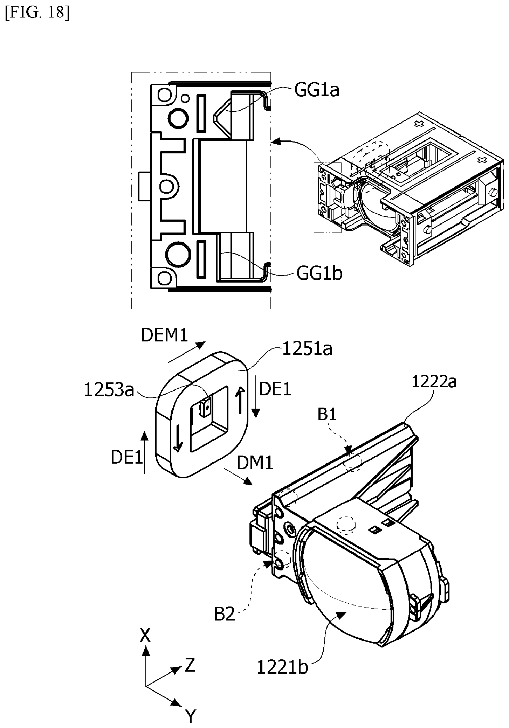

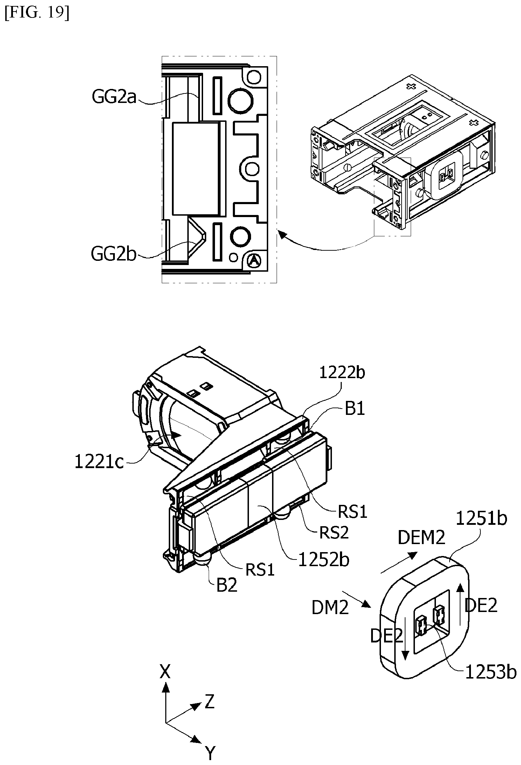

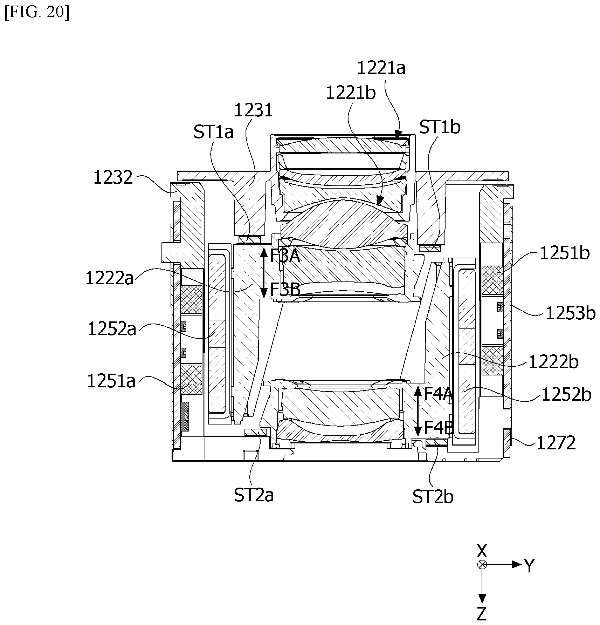

FIG. 14 is a perspective view of a second camera actuator according to an embodiment, FIG. 15 is an exploded perspective view of the second camera actuator according to the embodiment, FIG. 16 is a view along line D-D' in FIG. 14, FIGS. 17A, 17B, and 17C are perspective views of a second housing in the second camera actuator according to the embodiment, FIGS. 18 and 19 are views for describing each driving of a lens assembly according to the embodiment, and FIG. 20 is a view for describing driving of the second camera actuator according to the embodiment.

Referring to FIGS. 14 to 16, the first camera actuator 1200 according to the embodiment may include a lens part 1220, a second housing 1230, a second driving part 1250, a base part 1260, a second board part 1270, a bonding member 1280, a stopper part ST, and a yoke part YK. Furthermore, the second camera actuator 1200 may further include a second shield can (not shown), an elastic part (not shown), and a bonding member (not shown).

The second shield can (not shown) may be positioned in one region (e.g., an outermost side) of the second camera actuator 1200 and positioned to surround the components (the lens part 1220, the second housing 1230, the second driving part 1250, the base part 1260, the second board part 1270, and the image sensor IS) describe below.

The second shield can (not shown) can block or reduce electromagnetic waves generated from the outside. Therefore, it is possible to reduce the occurrence of a malfunction of the second driving part 1250.

The lens part 1220 may be positioned in the second shield can (not shown). The lens part 1220 may move in the third direction (Z-axis direction or optical axis direction). Therefore, the above-described AF function and zooming function may be performed.

In addition, the lens part 1220 may be positioned in the second housing 1230. Therefore, at least a portion of the lens part 1220 may move in the second housing 1230 in the optical axis direction or third direction (Z-axis direction).

Specifically, the lens part 1220 may include a lens group 1221 and a moving assembly 1222.

First, the lens group 1221 may include at least one lens. In addition, although a plurality of lens groups 1221 may be provided, the following description will be made based on one lens group.

The lens group 1221 may be coupled to the moving assembly 1222 to move in the third direction (Z-axis direction) by an electromagnetic force generated from the first magnet 1252a and the second magnet 1252b coupled to the moving assembly 1222.

In the embodiment, the lens group 1221 may include a first lens group 1221a, a second lens group 1221b, and a third lens group 1221c. The first lens group 1221a, the second lens group 1221b, and the third lens group 1221c may be sequentially disposed in the optical axis direction. Furthermore, the lens group 1221 may further include a fourth lens group 1221d. The fourth lens group 1221d may be disposed at a rear end of the third lens group 1221c.

The first lens group 1221a may be fixedly coupled to a 2-1 housing. That is, the first lens group 1221a may not move in the optical axis direction.

The second lens group 1221b may be coupled to a first lens assembly 1222a to move in the third direction or optical axis direction. Magnification adjustment may be performed by moving the first lens assembly 1222a and the second lens group 1221b.

The third lens group 1221c may be coupled to the second lens assembly 1222b to move in the third direction or optical axis direction. Focus adjustment or auto focusing may be performed by moving the third lens group 1221c.

However, the present invention is not limited to the number of lens groups, and the fourth lens group 1221d may not be present, or additional lens groups or the like other than the fourth lens group 1121d may be further disposed.

The moving assembly 1222 may include an opening region surrounding the lens group 1221. The moving assembly 1222 is used interchangeably with the lens assembly. In addition, the moving assembly 1222 may be coupled to the lens group 1221 by any method. In addition, the moving assembly 1222 may include a groove in a side surface thereof and may be coupled to the first magnet 1252a and the second magnet 1252b through the groove. A coupling member or the like may be applied to the groove.

In addition, the moving assembly 1222 may be coupled to the elastic parts (not shown) at an upper end and a rear end thereof. Therefore, the moving assembly 1222 may be supported by the elastic parts (not shown) while moving in the third direction (Z-axis direction). That is, the position of the moving assembly 1222 may be maintained in the third direction (Z-axis direction). The elastic part (not shown) may be formed of any elastic element such as a leaf spring.

The moving assembly 1222 may be positioned in the second housing 1230 and may include the first lens assembly 1222a and a second lens assembly 1222b.

A region of the second lens assembly 1222b in which the third lens group is seated may be positioned at a rear end of the first lens assembly 1222a. That is, the region of the second lens assembly 1222b in which the third lens group 1221c is seated may be positioned between a region of the first lens assembly 1222a in which the second lens group 1221b is seated and the image sensor.

Each of the first lens assembly 1222a and the second lens assembly 1222b may be seated inside a 2-2 housing. For example, a recess in which a ball is disposed in the first lens assembly 1222a may be positioned to face a first side portion. In addition, a recess in which a ball is disposed in the second lens assembly 1222b may be positioned to face a second side portion. Detailed description thereof will be made below.

In addition, second driving magnets may be seated on outer surfaces of the first lens assembly 1222a and the second lens assembly 1222b. For example, the second magnet 1252b may be seated on the outer surface of the second lens assembly 1222b. The first magnet 1252a may be seated on the outer surface of the first lens assembly 1222a.

The second housing 1230 may be disposed between the lens part 1220 and the second shield can (not shown). In addition, the second housing 1230 may be disposed to surround the lens part 1220.

The second housing 1230 may include a 2-1 housing 1231 and a 2-2 housing 1232. The 2-1 housing 1231 may be coupled to the first lens group 1221a and may also be coupled to the above-described first camera actuator. The 2-1 housing 1231 may be positioned in front of the 2-2 housing 1232.

In addition, the 2-2 housing 1232 may be positioned at a rear end of the 2-1 housing 1231. The lens part 1220 may be seated inside the 2-2 housing 1232.

A hole may be formed in a side portion of the second housing 1230 (or the 2-2 housing 1232). A first coil 1251a and a second coil 1251b may be disposed in the hole. The hole may be positioned to correspond to the above-described groove of the moving assembly 1222.

In an embodiment, the second housing 1230 (in particular, the 2-2 housing 1232) may include a first side portion 1232a and a second side portion 1232b. The first side portion 1232a and the second side portion 1232b may be positioned to correspond to each other. For example, the first side portion 1232a and the second side portion 1232b may be symmetrically disposed with respect to the third direction. A second driving coil 1251 may be positioned on the first side portion 1232a and the second side portion 1232b. In addition, the second board part 1270 may be seated on outer surfaces of the first side portion 1232a and the second side portion 1232b. That is, a first board 1271 may be positioned on the outer surface of the first side portion 1232a, and a second board 1272 may be positioned on the outer surface of the second side portion 1232b.

In addition, as another example, first and second guide grooves facing the recesses (seating grooves in which first and second balls are seated) of the first lens assembly 1222a may be positioned in the first side portion. In addition, first and second guide grooves facing the recess of the second lens assembly 1222b may be positioned in the second side portion. In this case, there may be a structure in which a separate member (e.g., a guide part) including the first and second guide grooves is coupled to the 2-2 housing 1232. However, in the present embodiment, an integrated structure in which the first and second guide grooves are formed in the 2-2 housing 1232 will be described. Furthermore, as in another example, the first guide part and the second guide part may be positioned to correspond to each other. For example, the first guide part and the second guide part may be positioned to face each other with respect to the third direction (Z-axis direction). In addition, at least portions of the first guide part and the second guide part may overlap each other in the second direction (Y-axis direction).

The first guide part and the second guide part may include at least one groove (e.g., a guide groove) or recess. In addition, a first ball B1 or a second ball B2 may be seated in the groove or the recess. Therefore, the first ball B1 or the second ball B2 may move in the guide groove of the first guide part or the guide groove of the second guide part in the third direction (Z-axis direction).

Alternatively, the first ball B1 or the second ball B2 may move in the third direction along a rail formed inside the first side portion 1232a of the second housing 1230 or a rail formed inside the second side portion 1232b of the second housing 1230.

Therefore, the first lens assembly 1222a and the second lens assembly 1222b may move in the third direction.

According to the embodiment, the first ball B1 may be disposed on an upper side portion of the first lens assembly 1222a or the second lens assembly 1222b. In addition, the second ball B2 may be disposed on a lower side portion of the first lens assembly 1222a or the second lens assembly 1222b. For example, the first ball B1 may be positioned above the second ball B2. Therefore, at least a portion of the first ball B1 may overlap the second ball B2 in the first direction (X-axis direction) depending on a position.

In addition, the 2-2 housing 1232 may include first guide grooves GGla and GG2a facing a first recess RS1. In addition, the 2-2 housing 1232 may include second guide grooves GG1b and GG2b facing a second recess RS2. The first guide grooves GGla and GG2a and the second guide grooves GG1b and GG2b may be grooves extending in the third direction (Z-axis direction). In addition, the first guide grooves GGla and GG2a and the second guide grooves GG1b and GG2b may have different shapes. For example, the first guide grooves GGla and GG2a may be grooves with inclined side surfaces, and the second guide grooves GG1b and GG2b may be grooves with side surfaces perpendicular to lower surfaces.

The first magnet and the first coil may be positioned on the first side portion. In addition, the second magnet and the second coil may be positioned on the second side portion. In addition, the second magnet 1252b may be positioned to face the second coil 1251b. In addition, the first magnet 1252a may be positioned to face the first coil 1251a.

The elastic part (not shown) may include a first elastic member (not shown) and a second elastic member (not shown). The first elastic member (not shown) may be coupled to an upper surface of the moving assembly 1222. The second elastic member (not shown) may be coupled to a lower surface of the moving assembly 1222. In addition, the first elastic member (not shown) and the second elastic member (not shown) may be formed of a leaf spring as described above. In addition, the first elastic member (not shown) and the second elastic member (not shown) may provide elasticity for moving the moving assembly 1222. However, the present invention is not limited to the above-described position, and the elastic part may be disposed at any position.

In addition, the second driving part 1250 may provide a driving force for moving the lens part 1220 in the third direction (Z-axis direction). The second driving part 1250 may include a second driving coil 1251 and a second driving magnet 1252. Furthermore, the second driving part 1250 may further include a second Hall sensor part. The second Hall sensor part 1253 may include at least one fourth Hall sensor 1253a and may be positioned inside or outside the second driving coil 1251.

The moving assembly may be moved in the third direction (Z-axis direction) by an electromagnetic force generated between the second driving coil 1251 and the second driving magnet 1252.

The second driving coil 1251 may include a first coil 1251a and a second coil 1251b. The first coil 1251a and the second coil 1251b may be disposed in holes formed in the side portions of the second housing 1230. In addition, the first coil 1251a and the second coil 1251b may be electrically connected to the second board part 1270. Therefore, the first coil 1251a and the second coil 1251b may receive a current or the like through the second board part 1270.

The second driving magnet 1252 may include a first magnet 1252a and a second magnet 1252b. The first magnet 1252a and the second magnet 1252b may be disposed in the above-described groove of the moving assembly 1222 and positioned to correspond to the first coil 1251a and the second coil 1251b.

The base part 1260 may be positioned between the lens part 1220 and the image sensor IS. A component such as a filter may be fixed to the base part 1260. In addition, the base part 1260 may be disposed to surround the above-described image sensor. With this configuration, since the image sensor is free from foreign substances and the like, it is possible to improve the reliability of the device. However, the following description will be made without this in some drawings. However, the present invention may not be limited to such a structure.

In addition, the second camera actuator 1200 may be a zoom actuator or an AF actuator. For example, the second camera actuator 1200 may support one lens or a plurality of lenses and perform at least one of the AF function and the zooming function by moving the lenses according to a predetermined control signal of a controller.

In addition, the second camera actuator may be a fixed zoom or a continuous zoom. For example, the second camera actuator may provide the movement of the lens group 1221.

In addition, the second camera actuator may be formed of a plurality of lens assemblies. For example, in addition to the first lens assembly 1222a and the second lens assembly 1222b, at least one of a third lens assembly (not shown) and the guide pin (not shown) may be disposed in the second camera actuator. The above-described contents may be applied to the same. Therefore, the second camera actuator may perform a high-magnification zooming function through the second driving part. For example, the first lens assembly 1222a and the second lens assembly 1222b may be moving lenses that move through the second driving part and the guide pin (not shown), and the third lens assembly (not shown) may be a fixed lens, but the present invention is not limited thereto. For example, the third lens assembly (not shown) may perform a function of a focator by which light forms an image at a specific position, and the first lens assembly may perform a function of a variator for re-forming an image formed by the third lens assembly (not shown), which is the focator, at another position. Meanwhile, the first lens assembly may be in a state in which a magnification change is large because a distance to a subject or an image distance is greatly changed, and the first lens assembly, which is the variator, may play an important role in a focal length or magnification change of the optical system. Meanwhile, imaging points of an image formed by the first lens assembly, which is the variator, may be slightly different depending on a position. Therefore, the second lens assembly may perform a position compensation function for the image formed by the variator. For example, the second lens assembly may perform a function of a compensator for accurately forming an image at an actual position of the image sensor using the imaging points of the image formed by the second lens assembly 1222b which is the variator. However, the configuration of the embodiment will be described with reference to the following drawings.

The image sensor may be positioned inside or outside the second camera actuator. In an embodiment, as shown, the image sensor may be positioned outside the second camera actuator. For example, the image sensor may be positioned on a circuit board. The image sensor may receive light and convert the received light into an electrical signal. In addition, the image sensor may include a plurality of pixels in the form of an array. In addition, the image sensor may be positioned on the optical axis.

The second board part 1270 may come into contact with the second housing side portion. For example, the second board part 1270 may be positioned on an outer surface (first side surface) of the first side portion and an outer surface (second side surface) of the second side portion of the second housing, in particular, the 2-2 housing and may come into contact with the first side surface and the second side surface.

The stopper part ST includes a first stopper ST1 disposed at one end of the 2-2 housing 1232 and a second stopper ST2 disposed at the other end. The first stopper ST1 and the second stopper ST2 may be sequentially disposed in the optical axis direction.

Furthermore, a plurality of first stoppers ST1 may be formed and may be disposed on each of a moving path of the first lens assembly and a moving path of the second lens assembly. For convenience, the 1-1 stopper ST1a and the 1-2 stopper ST1b will be described. Likewise, a plurality of second stoppers ST2 may be formed and may be disposed on each of the moving path of the first lens assembly and the moving path of the second lens assembly. In addition, the 2-1 stopper ST2a and the 2-2 stopper ST2b will be described.

The 1-1 stopper ST1a and the 2-1 stopper ST2a may be positioned on the moving path of the first lens assembly. The 1-2 stopper ST1b and the 2-2 stopper ST2b may be positioned on the moving path of the second lens assembly.

The 1-1 stopper ST1a and the 1-2 stopper ST1b may overlap each other in the second direction. Alternatively, the 1-1 stopper ST1a and the 1-2 stopper ST1b may be misaligned in the second direction.

In addition, the 2-1 stopper ST2a and the 2-2 stopper ST2b may be positioned to be misaligned in the second direction. A distance between the 1-1 stopper ST1a and the 2-1 stopper ST2a in the third direction may be smaller than a distance between the 1-2 stopper ST1b and the 2-2 stopper ST2b. This is a configuration that reflects a movable distance (stroke) of the first lens assembly smaller than a movable distance (stroke) of the second lens assembly.

In an embodiment, the second yoke part or the yoke part YK may be disposed outside the second driving part, and for example, the yoke part YK may be disposed outside the first and second coils. The second yoke part may include a first yoke YK1 and a second yoke YK2.

The first yoke YK1 and the second yoke YK2 may be disposed opposite to each other. For example, the first yoke YK1 and the second yoke YK2 may be positioned to correspond to each other with respect to the optical axis.

The first yoke YK1 may be positioned adjacent to the first coil 1251a. The second yoke YK2 may be positioned adjacent to the second coil 1251b. The first coil 1251a and the second coil 1251b may be positioned inside the first yoke YK1 and the second yoke YK2. In addition, the first yoke YK1, the first coil 1251a, the second coil 1251b, and the second yoke YK2 may be sequentially disposed in one direction (e.g., the second direction). The first yoke YK1 may generate an attractive force with the first magnet. In addition, the second yoke YK2 may generate an attractive force with the second magnet. Therefore, the attitudes of the first and second lens assemblies may be maintained.

Furthermore, thicknesses of the first yoke YK1 and the second yoke YK2 may vary in some regions. With this configuration, it is possible to suppress the influence of the magnetic force generated from the first and second magnets or the first and second coils on other magnets or coils. For example, the first yoke YK1 can suppress the magnetic force generated by the first magnet from being applied to the second magnet and the second coil.

Referring to FIGS. 17A, 17B, and 17C, as described above, the second housing 1230 (in particular, the 2-2 housing 1232) may include the first side portion 1232a and the second side portion 1232b. The first side portion 1232a and the second side portion 1232b may be positioned to correspond to each other. For example, the first side portion 1232a and the second side portion 1232b may be symmetrically disposed with respect to the third direction. The second driving coil may be positioned on the first side portion 1232a and the second side portion 1232b. In addition, the second board part may be seated on the outer surfaces of the first side portion 1232a and the second side portion 1232b. The second board part may be positioned outside the driving coil and electrically connected to the driving coil.

For example, the first board may be positioned on the outer surface of the first side portion 1232a, and the second board may be positioned on the outer surface of the second side portion 1232b.

Furthermore, the first guide grooves GG1a and GG1b in which the first ball and the second ball are seated may be positioned in the inner surface of the first side portion 1232a. The first guide grooves GGla and GG1b may face the above-described first recess and second recess. Likewise, the second guide grooves GG2a and GG2 in which the first and second balls are seated may be positioned in the inner surface of the second side portion 1232b. The first guide grooves GGla and GG1b may face the above-described first recess and second recess.

Furthermore, the first side portion 1232a may include a first side portion hole 1232ah. The first magnetic may be positioned in the first side portion hole 1232ah. Furthermore, a length of the first side portion hole 1232ah in the first direction may be smaller than that of the first coil.

In addition, the second side portion 1232b may include the second side portion hole 1232bh. The second magnet may be positioned in the second side portion hole 1232bh. Furthermore, a length of the second side portion hole 1232bh in the first direction may be smaller than that of the second coil.

Furthermore, the 2-2 housing 1232 may include a housing hole 1232h disposed in one of an upper portion and a lower portion thereof. Coupling may be easily performed through the housing hole 1232h or inspection (e.g., vision inspection) may be performed on the first lens assembly and the second lens assembly.

In addition, the first guide grooves GGla and GG1b positioned on the first side portion 1232a may extend in the third direction. Furthermore, the first guide grooves GGla and GG1b may have different shapes. For example, one GGla of the first guide grooves may be an inclined groove, and the other GG1b may be a flat structure. It may also be applied to the second guide grooves GG2a and GG2b in the same manner. The first and second balls may be seated in the inclined groove and the flat structure so that the first lens assembly or the second lens assembly may move in the optical axis direction.

Referring to FIGS. 18 and 19, in the camera module according to the embodiment, by generating an electromagnetic force DEM1 between the first magnet 1252a and the first coil 1251a, the first lens assembly 1222a may move along a rail positioned on the inner surface of the housing through the first ball B1 and the second ball B2 in a direction parallel to the optical axis, that is, in the third direction (Z-axis direction) or a direction opposite to the third direction.

Specifically, in the camera module according to the embodiment, the first magnet 1252a may be provided in the first lens assembly 1222a, for example, by a vertical magnetization method. For example, in an embodiment, both of an N pole and S pole of the first magnet 1252a may be positioned to face the first coil 1251a. Therefore, each of the N pole and S pole of the first magnet 1252a may be disposed to correspond to a region in which a current flows from the first coil 1251a in the X-axis direction or a direction opposite to the X-axis direction.

In an embodiment, when a magnetic force is applied from the N pole of the first magnet 1252a in a direction opposite to the second direction (Y-axis direction) and a current DE1 flows at the first coil 1251a corresponding to the N pole in a direction opposite to the first direction (X-axis direction), the electromagnetic force DEM1 may act in the third direction (Z-axis direction) according to the interaction of the electromagnetic force (e.g., Fleming's left hand rule).

In addition, in an embodiment, when a magnetic force is applied from the S pole of the first magnet 1252a in the second direction (Y-axis direction) and the current DE1 flows at the first coil 1251a corresponding to the S pole in the first direction (X-axis direction), the electromagnetic force DEM1 may act in the Z-axis direction according to the interaction of the electromagnetic force.

At this time, since the first coil 1251a is fixed to the second housing side portion, the first lens assembly 1222a on which the first magnet 1252a is disposed may move in the direction opposite to the Z-axis direction by the electromagnetic force DEM1 according to the current direction. That is, the second driving magnet may move in an opposite direction of the electromagnetic force applied to the second driving coil. In addition, the direction of the electromagnetic force may be changed depending on the current of the coil and the magnetic force of the magnet.

Therefore, the first lens assembly 1222a may move along the rail positioned on the inner surface of the housing through the first ball B1 and the second ball B2 in the third direction or the direction (both directions) parallel to the optical axis direction. At this time, the electromagnetic force DEM1 may be controlled in proportion to the current DE1 applied to the first coil 1251a.

The first lens assembly 1222a or the second lens assembly 1222b may include the first recess RS1 in which the first ball B1 is seated. In addition, the first lens assembly 1222a or the second lens assembly 1222b may include the second recess RS2 in which the second ball B2 is seated. A length of the first recess RS1 in the optical axis direction (Z-axis direction) may be preset. In addition, a length of the second recess RS2 in the optical axis direction (Z-axis direction) may be preset. Therefore, moving distances of the first ball B1 and the second ball B2 in the optical axis direction in each recess may be adjusted. That is, the first recess RS1 or the second recess RS2 may be a stopper for the first and second balls B1 and B2.

In addition, in the camera module according to the embodiment, the second magnet 1252b may be provided on the second lens assembly 1222b, for example, by the vertical magnetization method or the like. For example, in an embodiment, both of an N pole and S pole of the second magnet 1252b may be positioned to face the second coil 1251b. Therefore, each of the N pole and S pole of the second magnet 1252b may be disposed to correspond to an area where a current flows from the second coil 1251b in the X-axis direction or the direction opposite to the X-axis direction.

In an embodiment, when a magnetic force DM2 is applied from the N pole of the second magnet 1252b in the second direction (Y-axis direction) and the current DE2 flows at the second coil 1251b corresponding to the N pole in the first direction (X-axis direction), an electromagnetic force DEM2 may act in the third direction (Z-axis direction) according to the interaction of the electromagnetic force (e.g., Fleming's left hand rule).

In addition, in an embodiment, when a magnetic force is applied from the S pole of the second magnet 1252b in a direction opposite to the second direction (Y-axis direction) and the current DE2 flows at the second coil 1251b corresponding to the S pole in a direction opposite to the first direction (X-axis direction), the electromagnetic force DEM2 may act in the Z-axis direction according to the interaction of the electromagnetic force.

At this time, since the second coil 1251b is fixed to the second housing side portion, the second lens assembly 1222b on which the second magnet 1252b is disposed may move in the direction opposite to the Z-axis direction by the electromagnetic force DEM2 according to the current direction. For example, as described above, the direction of the electromagnetic force may be changed depending on the current of the coil and the magnetic force of the magnet. Therefore, the second lens assembly 1222b may move along the rail positioned on the inner surface of the second housing through the second ball B2 in a direction parallel to the third direction (Z-axis direction). At this time, the electromagnetic force DEM2 may be controlled in proportion to the current DE2 applied to the second coil 1251b.

Referring to FIG. 20, in the camera module according to the embodiment, the second driving part may provide driving forces F3A, F3B, F4A, and F4B that move the first lens assembly 1222a and the second lens assembly 1222b of the lens part 1220 in the third direction (Z-axis direction). As described above, the second driving part may include the second driving coil 1251 and the second driving magnet 1252. In addition, the lens part 1220 may be moved in the third direction (Z-axis direction) by the electromagnetic force generated between the second driving coil 1251 and the second driving magnet 1252 .

At this time, the first coil 1251a and the second coil 1251b may be disposed in the holes formed in the side portions (e.g., the first side portion and the second side portion) of the second housing 1230. In addition, the second coil 1251b may be electrically connected to the first board 1271. The first coil 1251a may be electrically connected to the second board 1272. Therefore, the first coil 1251a and the second coil 1251b may receive a driving signal (e.g., a current) from a driving driver on the circuit board 1300 through the second board part 1270.

At this time, the first lens assembly 1222a on which the first magnet 1252a is seated may move in the third direction (Z-axis direction) by the electromagnetic forces F3A and F3B between the first coil 1251a and the first magnet 1252a. In addition, the second lens group 1221b seated on the first lens assembly 1222a may also move in the third direction.

In addition, the second lens assembly 1222b on which the second magnet 1252b is seated may be moved in the third direction (Z-axis direction) by the electromagnetic forces F4A and F4B between the second coil 1251b and the second magnet 1252b. In addition, the third lens group 1221c seated on the second lens assembly 1222b may also move in the third direction.

Therefore, as described above, a focal length or magnification of the optical system may be changed by moving the second lens group 1221b and the third lens group 1221c. In an embodiment, magnification may be changed by moving the second lens group 1221b. That is, zooming may be performed. In addition, a focus may be adjusted by moving the third lens group 1221c. That is, auto focusing may be performed. With this configuration, the second camera actuator may be a fixed zoom or a continuous zoom.

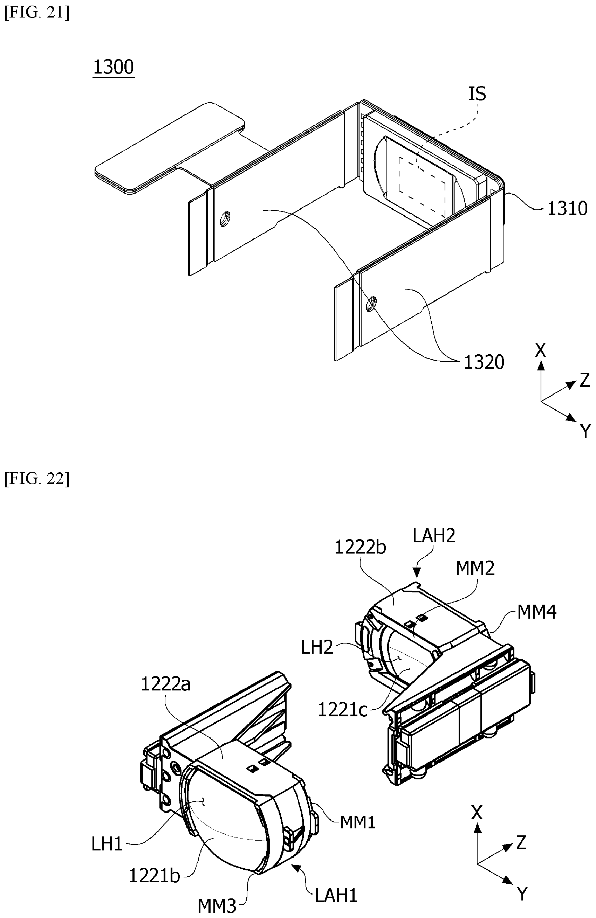

FIG. 21 is a schematic diagram showing a circuit board according to an embodiment.

Referring to FIG. 21, as described above, the circuit board 1300 according to the embodiment may include a first circuit board part 1310 and a second circuit board part 1320. The first circuit board part 1310 may be positioned under the base and coupled to the base. In addition, the image sensor IS may be disposed on the first circuit substrate part 1310. In addition, the first circuit board part 1310 and the image sensor IS may be electrically connected. That is, the base may be positioned at the rear end of the second camera actuator, and the image sensor and the circuit board (first circuit board part) may be positioned at the rear end of the base. The base may include a filter (e.g., infrared rays).

In addition, the second circuit board part 1320 may be positioned on a side portion of the base. In particular, the second circuit board part 1320 may be positioned on a first side portion of the base. Therefore, the second circuit board part 1320 may be positioned adjacent to the first coil positioned adjacent to the first side portion for easy electrical connection. In addition, the second circuit board part 1320 may be positioned on the second side portion. As described above, a plurality of second circuit board parts 1320 may be formed. However, the present invention is not limited thereto, and the second circuit board part 1320 may be disposed on only any one of the first side portion and the second side portion.

Furthermore, the circuit board 1300 may further include a fixed board (not shown) positioned on a side surface thereof. Therefore, even when the circuit board 1300 is made of a flexible material, the circuit board 1300 may be coupled to the base while maintaining stiffness by the fixed board.

The second circuit board part 1320 of the circuit board 1300 may be positioned on the side portion of the second driving part 1250. The circuit board 1300 may be electrically connected to the first driving part and the second driving part. For example, electrical connection may be made by a surface mounting technology (SMT). However, the present invention is not limited to such a method.

The circuit board 1300 may include a circuit board having wiring patterns that may be electrically connected, such as a rigid printed circuit board (PCB), a flexible PCB, or a rigid-flexible PCB. However, the present invention is not limited to these types.

In addition, the circuit board 1300 may be electrically connected to another camera module in the terminal or a processor of the terminal. Therefore, the above-described camera actuator and camera module including the same may transmit and receive any signal in the terminal.

FIG. 22 is a perspective view of a first lens assembly, a first bonding member, a second bonding member, and a second lens assembly according to an embodiment.

Referring to FIG. 22, the first lens assembly 1222a and the second lens assembly 1222b may be disposed to be spaced apart from each other in the optical axis direction (Z-axis direction). In addition, the first lens assembly 1222a and the second lens assembly 1222b may be moved in the optical axis direction (Z-axis direction) by the second driving part. For example, an AF or zooming function may be performed by moving the first lens assembly 1222a and the second lens assembly 1222b.

In addition, the first lens assembly 1222a may include a first lens holder LAH1 for holding and coupling the second lens group 1221b. The first lens holder LAH1 may be coupled to the second lens group 1221b. In addition, the first lens holder LAH1 may include a first lens hole LH1 for receiving the second lens group 1221b. That is, the second lens group 1221b including at least one lens may be disposed in the first lens hole LH1. The first lens holder LAH1 is the same as a receiving part (e.g., a first receiving part or a second receiving part) described below and used interchangeably therewith.

In addition, the second lens assembly 1222b may include a second lens holder LAH2 for holding and coupling the third lens group 1221c. In addition, the second lens holder LAH2 may include a second lens hole LH2 for receiving the third lens group 1221c. That is, at least one lens may be disposed in the second lens hole LH2.

In the embodiment, each of the first lens assembly 1222a and the second lens assembly 1222b may include outer surfaces adjacent to each other. The first lens assembly 1222a may include a first outer surface MM1, and the second lens assembly 1222b may include a second outer surface MM2. The first outer surface MM1 may be a lower surface of the first lens holder LAH1 with respect to the optical axis direction (Z-axis direction). In addition, a third outer surface MM3 described below may be an upper surface of the first lens holder LAH1. In addition, the second outer surface MM2 may be an upper surface of the second lens holder LAH2, and the fourth outer surface MM4 may be the lower surface of the second lens holder LAH2.

In addition, at least portions of the first outer surface MM1 and the second outer surface MM2 may overlap each other in the optical axis direction (Z-axis direction). In the embodiment, at least portions of the first outer surface MM1 to the fourth outer surface MM4 may overlap each other in the optical axis direction (Z-axis direction).

For example, a bonding member (not shown) may come into contact with at least one of the first outer surface MM1 and the second outer surface MM2.

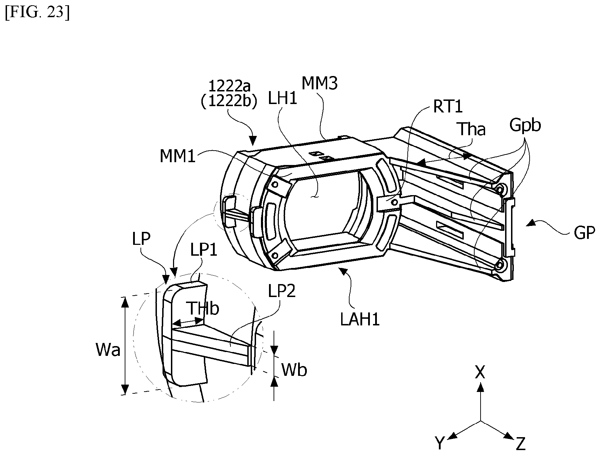

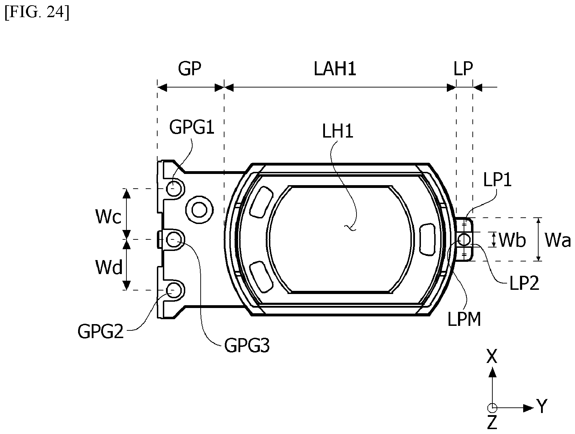

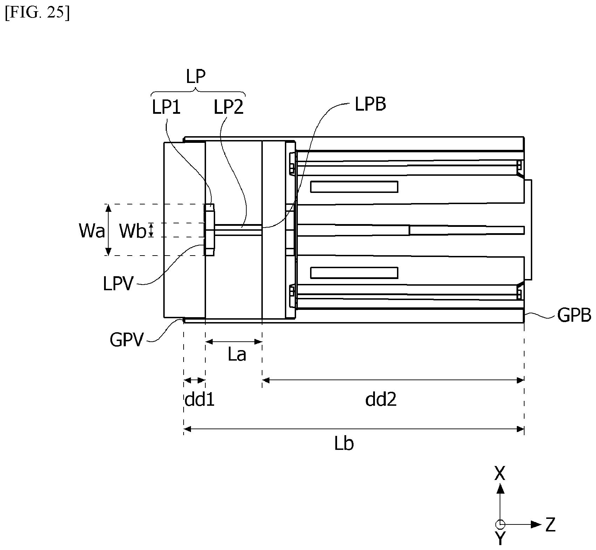

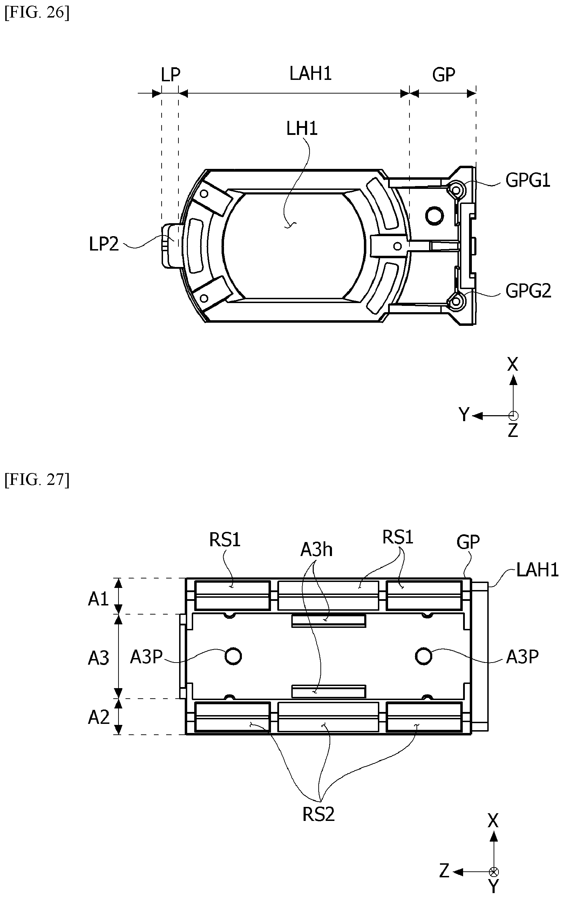

FIG. 23 is a perspective view of the first lens assembly (or the second lens assembly) according to the embodiment, FIG. 24 is a front view of the first lens assembly (or the second lens assembly) according to the embodiment, FIG. 25 is one side view of the first lens assembly (or the second lens assembly) according to the embodiment, FIG. 26 is a rear view of the first lens assembly (or the second lens assembly) according to the embodiment, and FIG. 27 is another side view of the first lens assembly (or the second lens assembly) according to the embodiment.

Referring to FIG. 23, the first lens assembly 1222a and the second lens assembly 1222a may be disposed to be spaced apart from each other in the optical axis direction (Z-axis direction). The following description will be made based on the first lens assembly 1222a, but the description of the first lens assembly may be applied to the second lens assembly 1222a in the same manner. Furthermore, the first lens assembly 1222a and the second lens assembly 1222a may be disposed side by side along the optical axis, and each guiding part may be positioned at facing sides. For example, the first lens assembly 1222a and the second lens assembly 1222a may be positioned in a shape that is inverted or corresponds to the optical axis.

In addition, at least one of the first lens assembly 1222a and the second lens assembly 1222b may include a receiving part (lens holder) LAH1, a guiding part GP, and a lens protruding part LP. The following description will be made based on the first lens assembly 1222a.

The receiving part or the first lens holder LAH1 includes a first lens hole LH1. Hereinafter, the receiving part LAH1 will be described. In addition, a lens may be disposed in the first lens hole LH1. In this case, a plurality of lenses may be provided, for example, at least one thereof may be formed of glass or the like.

Furthermore, the guiding part GP may come into contact with the receiving part LAH1 and may be formed with a ball part. As described above, the ball part may include a first ball and a second ball. In addition, the first ball and the second ball may be positioned or seated on the first lens assembly 1222a and the guide groove. Therefore, when a driving force (e.g., an electromagnetic force) is generated by the driving part, the first lens assembly 1222a may be moved in the optical axis direction by the rolling motion of the first ball and the second ball.

The lens protruding part LP may come into contact with the receiving part LAH1 and may correspond to the guiding part GP.

In an embodiment, the guiding part GP may be positioned on one side surface or one side portion of the receiving part LAH1. In addition, the lens protruding part LP may be positioned on the other side surface or the other side portion of the receiving part LAH1. For example, the guiding part GP may be positioned at a side opposite to the lens protruding part LP with respect to the receiving part LAH1.

In addition, the lens protruding part LP according to the embodiment may include a plate LP1 and a support LP2. The plate LP1 may be positioned at a front end of the support LP2. In addition, the support LP2 may be connected to the plate LP1 and positioned at a rear end of the plate LP1. Here, the front end is an end in a direction opposite to the optical axis direction, and the rear end is an end in the optical axis direction.

In addition, a height Wa of the plate LP1 may be greater than a height Wb of the support LP2. Here, the height corresponds to a length in the first direction (X-axis direction). Furthermore, a thickness THb of the lens protruding part LP or the support LP2 may decrease along the optical axis. Here, the thickness corresponds to a length in the second direction (Y-axis direction). Furthermore, the length corresponds to a length in the third direction (Z-axis direction). With this structure, withdrawal can be easy while maintaining the support strength for the plate LP1. In addition, the support strength can be increased in a first pin groove positioned in the plate LP1, thereby easily maintaining flatness during withdrawal.

In addition, a length of the plate PL1 according to the embodiment may be smaller than a length of the support LP2. Therefore, it is possible to further improve the ease of withdrawal and further increase support strength.

In addition, the guiding part GP according to the embodiment may include a side plate GPa and a wing portion GPb. The wing portion GPb may come into contact with both the side plate GPa and the receiving part LAH1. A thickness THa of the wing portion GPb may decrease in the optical axis direction. In addition, a plurality of wing portions Gpb may be provided. With this configuration, withdrawal can be easy while maintaining the support strength for the side plate GPa. In addition, support strength can be increased in a second pin groove positioned on the side plate GPa, thereby easily maintaining flatness during withdrawal.

Furthermore, a retainer RT1 may be positioned on the first outer surface MM1 of the first lens assembly 1222a. The first lens assembly and the second lens assembly may have retainers positioned on facing outer surfaces (first and second outer surfaces). The retainers RT1 may be coupled to the first outer surface MM1 through a protrusion/groove structure. Furthermore, a bonding member including an epoxy or the like may be applied to the first outer surface MM1. Therefore, it is possible to increase the coupling strength between the first outer surface MM1 and the retainer RT1. The retainer RT1 can prevent the separation of the lens positioned in the first lens hole LH1. Furthermore, a plurality of grooves or protrusions may be formed on the first outer surface MM. In addition, a plurality of marks (e.g., grooves) may be positioned on a side surface of the first lens assembly 1222a in the first direction. Position of the first and second lens assemblies may be recognized through the marks, and the driving of the first and second lens assemblies may be inspected using the above recognition.

Referring to FIGS. 24 to 26, in an embodiment, the lens protruding part LP may include a first pin groove LPG disposed in an upper surface LPU of the plate LP1. The first pin groove LPG may be positioned at the center of the upper surface LPU of the plate LP1. For example, the first pin groove LPG may be positioned in a portion or line that bisects the upper surface LPU of the plate LP1 in the first direction (X-axis direction). In addition, a center LPM of the first pin groove LPG may be positioned on a line that bisects the upper surface LPU of the plate LP1 in the first direction (X-axis direction). A shape of the first pin groove LPG may be any shape such as a circle and a block. For example, the shape of the first pin groove LPG may correspond to a shape of a mill pin.

The first pin groove LPG may overlap the support LP2 in the optical axis direction or the third direction (Z axis direction). With this configuration, even when a force is applied to the first pin groove LPG in close contact with the mill pin for withdrawal, the flatness of the first lens assembly can be maintained.

In addition, the guiding part GP may include a second pin groove GPG disposed in the upper surface GPU of the guiding part GP. A plurality of second pin grooves GPG may be provided. For example, the second pin groove GPG may include a 2-1 pin groove GPG1, a 2-2 pin groove GPG2, and a 2-3 pin groove GPG3. The 2-3 pin groove GPG3 may be positioned between the 2-1 pin groove GPG1 and the 2-2 pin groove GPG2. Furthermore, the 2-1 pin groove GPG1, the 2-2 pin groove GPG2, and the 2-3 pin groove GPG3 may overlap each other in the first direction (X-axis direction).

In addition, the plurality of second pin grooves GPG may all have the same separation distances Wc and Wd from adjacent second pin grooves. Therefore, the force applied to the second pin groove GPG may be uniformly applied to the guiding part, thereby suppressing the bending of the guiding part.

In addition, according to the embodiment, a length Lb of the guiding part GP in the third direction may be greater than a length La of the lens protruding part LP in the third direction. In contrast, the length La of the lens protruding part LP may be smaller than the length Lb of the guiding part GP.

In addition, the upper surface GPU of the guiding part GP may be positioned at a front end of the upper surface LPU of the lens protruding part LP. In addition, a lower surface GPB of the guiding part GP may be disposed at a rear end of the lower surface LPB of the lens protruding part LP. In addition, the length of the guiding part GP in the first direction may be greater than the length of the lens protruding part LP in the first direction. Therefore, the guiding part GP may have a greater length in both the first direction and the third direction than the lens protruding part LP.

Corresponding to the shapes of the guiding part GP and the lens protruding part LP, the number of second pin grooves GPG may be more than the number of first pin grooves LPG. With this configuration, even when a force is applied to the plurality of second pin grooves GPG by a mill pin, the straightness or flatness of the guiding part GP can be maintained. Therefore, the guiding part or the first lens assembly may move accurately in the Z-axis direction through the ball part positioned in the recess of the guiding part GP. That is, zooming or AF may move along the optical axis, thereby suppressing the twisting of the optical axis.

Furthermore, at least portions of the first pin groove LPG and the second pin groove GPG may overlap each other. For example, the first pin groove LPG and the second pin groove GPG may overlap each other in the second direction (Y-axis direction). For example, the 2-3 pin groove GPG3 may overlap the first pin groove LPG in the second direction.

In addition, the first pin groove LPG may be positioned at a rear end of the second pin groove GPG. Therefore, even when a force is applied to the lens protruding part LP and the guiding part GP, it is possible to suppress bending due to a difference in shape or size.

In addition, the wing portion GPb may overlap the second pin groove GPG in the optical axis direction (Z-axis direction). For example, a plurality of wing portions GPb may overlap a plurality of second pin grooves GPG in the optical axis direction. With this configuration, the flatness of the first lens assembly, in particular, the flatness of the guiding part GP in which the ball is disposed, can be maintained even when a force is applied to the second pin groove side in close contact with the mill pin for withdrawal.

In addition, the centers of the plurality of second pin grooves (e.g., centers of the 2-3 pin grooves) and the center LPM of the first pin groove LPG may be positioned on a virtual line parallel or parallel to the second direction (Y-axis direction). Therefore, it is possible to suppress the guiding part GP from being bent to one of upper or lower sides by the force applied to the mill pin during withdrawal.

Referring also to FIG. 27, according to the embodiment, the side plate GPa of the guiding part GP includes the first region A1, the second region A2, and the third region A3.

The third region A3 is disposed between the first region A1 and the second region A2. In addition, the first region A1, the third region A3, and the second region A2 may be sequentially positioned in a direction opposite to the first direction.

The first region A1 may include the first recess RS1. In addition, the second region A2 may include the second recess RS2. A first ball and a second ball may be seated on the first recess RS1 and the second recess RS2, respectively.

Furthermore, a driving yoke may be disposed in the third region A3. The first magnet may be seated on the driving yoke. The driving yoke may be seated on the third region A3 and coupled to the guiding part GP. For example, the driving yoke may be coupled to the side plate GPa. To this end, a yoke hole A3h or a coupling protrusion A3p may be further disposed in the third region A3. The side plate GPa may be coupled to the driving yoke through the yoke hole A3h or the coupling protrusion A3p. Additionally, a bonding member (e.g., an epoxy) may be additionally applied to the third region A3.

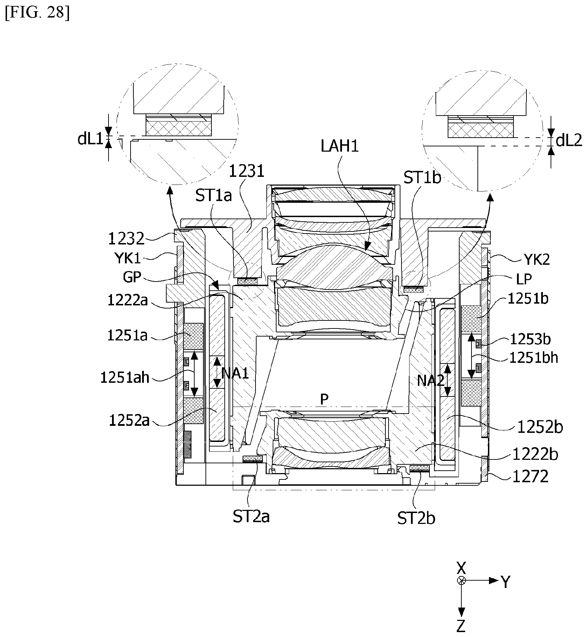

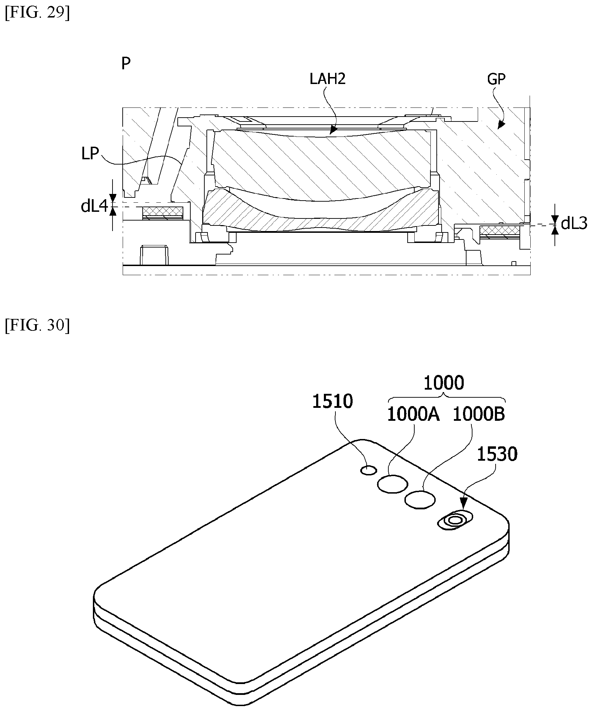

FIG. 28 is a cross-sectional view of a second camera actuator according to the embodiment, and FIG. 29 is an enlarged view of portion P in FIG. 28.

Referring to FIGS. 28 and 29, in the second camera actuator, the first yoke YK1 may be disposed adjacent to the first coil 1251a. In addition, the second yoke YK2 may be positioned adjacent to the second coil 1251b. In addition, the first yoke YK1 may be positioned adjacent to the first magnet 1252a. In addition, the second yoke YK2 may be positioned adjacent to the second magnet 1252b.

Furthermore, the first and second magnets 1252a may include a first pole region (N pole or S pole), a second pole region (S pole or N pole), and a neutral region NA1 or NA2. The neutral region NA1 or NA2 may be disposed between the first pole region and the second pole region. In addition, the first pole region, the neutral region, and the second pole region may be sequentially arranged in the optical axis direction in the first magnet 1252a. Likewise, the first pole region, the neutral region, and the second pole region may be sequentially disposed in the optical axis direction in the second magnet 1252b. In addition, in the first magnet 1252a and the second magnet 1252b, the first pole region may be the N pole. In addition, in the first magnet 1252a and the second magnet 1252b, the second pole region may be the S pole. The converse is also established.

In an embodiment, a minimum magnification may be provided when the first lens assembly 1222a moves as close as possible to the image sensor or in the third direction (Z-axis direction). In addition, when the first lens assembly 1222a maximally moves toward the first camera actuator or in a direction opposite to the third direction, the maximum magnification may be provided. At such a minimum or maximum magnification, the second lens assembly may be present at any position for AF.

First, the second camera actuator may further include the first stoppers ST1a and ST1b disposed at one end or a front end within the second housing (or the 2-2 housing 1232) and the second stoppers ST2a and ST2b disposed at the other end.

In addition, the first stopper includes the 1-1 stopper ST1a disposed at one side thereof and the 1-2 stopper ST1b disposed at the other side. In addition, the second stopper may include the 2-1 stopper ST2a disposed at one side and the 2-2 stopper ST2b disposed at the other side. One side and the other side may be one side and a side opposite to the one side in the second direction. The 1-1 stopper ST1a may overlap the 2-1 stopper ST2a in the optical axis direction. The 1-2 stopper ST1b may overlap the 2-2 stopper ST2b in the optical axis direction.

In addition, according to the driving of the first lens assembly, the first lens assembly 1222a may be positioned as close as possible to the first stoppers ST1a and St1b. In this case, a distance dL1 between the guiding part GP and the 1-1 stopper ST1a in the first lens assembly 1222a may be smaller than a distance dL2 between the 1-2 stopper ST1b and the lens protruding part LP of the first lens assembly. That is, even when the first lens assembly 1222a maximally moves toward the first camera actuator, the first lens assembly 1222a may first collide with the 1-1 stopper ST1a and then collide with the 1-2 stopper ST1b. Therefore, even when a lens made of glass is disposed in the first lens assembly 1222a (e.g., a foremost end), collision can be minimized at a maximum movement(mecha position) of the first lens assembly 1222a. That is, a cracking phenomenon of the lens can be suppressed. Furthermore, shock absorption can primarily occur in the guiding part having a large volume, thereby minimizing damage to the first lens assembly.

Likewise, a distance dL3 between the 2-2 stopper ST2b and the guiding part GP of the second lens assembly 1222b may be smaller than a distance dL4 between the 2-1 stopper ST2a and the lens protruding part LP of the second lens assembly 1222b.

That is, even when the second lens assembly 1222b maximally moves to the image sensor or in the optical axis direction, the second lens assembly 1222b may first collide with the 2-2 stopper ST2b and then collide with the 2-1 stopper ST2a. Therefore, even when a lens made of glass is disposed in the second lens assembly 1222b, collision can be minimized at the maximum movement(mecha position) of the first lens assembly 1222a. That is, a cracking phenomenon of the lens can be suppressed. Furthermore, shock absorption can primarily occur in the guiding part having a large volume, thereby minimizing damage to the second lens assembly.

FIG. 30 is a perspective view of a mobile terminal to which the camera module according to the embodiment is applied.

As shown in FIG. 30, a mobile terminal 1500 according to the embodiment may include a camera module 1000, a flash module 1530, and an AF device 1510, which are provided on a rear surface thereof.

The camera module 1000 may include an image capturing function and an AF function. For example, the camera module 1000 may include the AF function using an image.

The camera module 1000 processes an image frame of a still image or a moving image obtained by an image sensor in a capturing mode or a video call mode.

The processed image frame may be displayed on a predetermined display and stored in a memory. A camera (not shown) may also be disposed on a front surface of a body of the mobile terminal.

For example, the camera module 1000 may include a first camera module 1000 and a second camera module 1000, and the first camera module 1000A may implement an OIS function together with an AF or zooming function.

The flash module 1530 may include a light emitting device for emitting light therein. The flash module 1530 may be operated by a camera operation of the mobile terminal or a user's control.

The AF device 1510 may include one of a package of a surface light emitting laser device as a light emitting unit.

The AF device 1510 may include the AF function using a laser. The AF device 1510 may be mainly used in a condition that the AF function using the image of the camera module 1000 is degraded, for example, a proximity of 10 m or less or dark environment.

The AF device 1510 may include a light emitting unit including a vertical cavity surface emitting laser (VCSEL) semiconductor device and a light receiving unit for converting light energy into electrical energy, such as a photodiode.

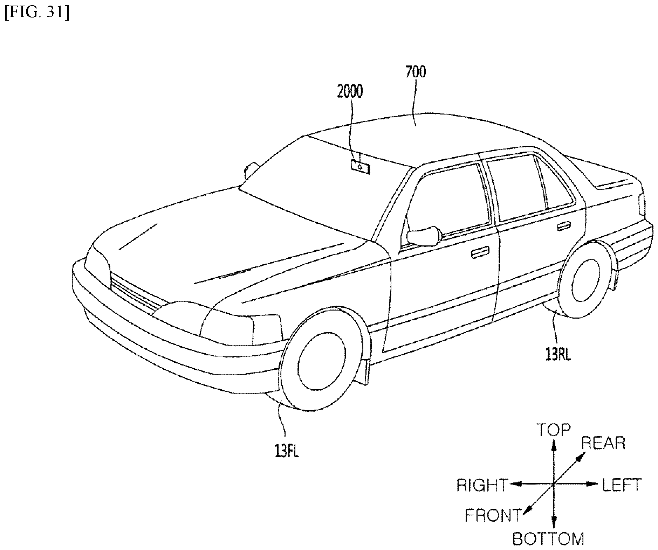

FIG. 31 is a perspective view of a vehicle to which the camera module according to the embodiment is applied.

For example, FIG. 31 is an external view of the vehicle including a vehicle driving assistance device to which the camera module 1000 according to the embodiment is applied.

Referring to FIG. 31, a vehicle 700 according to the embodiment may include wheels 13FL and 13FR rotated by a power source and a predetermined sensor. Although the sensor may be a camera sensor 2000, the present invention is not limited thereto.

The camera sensor 2000 may be a camera sensor to which the camera module 1000 according to the embodiment is applied. The vehicle 700 according to the embodiment may acquire image information through the camera sensor 2000 for capturing a forward image or a surrounding image, determine a situation in which a lane line is not identified using the image information, and generate a virtual lane line when the lane line is not identified.

For example, the camera sensor 2000 may acquire a forward image by capturing a view in front of the vehicle 700, and a processor (not illustrated) may acquire image information by analyzing an object included in the front image.

For example, when a lane line, an adjacent vehicle, a traveling obstacle, and objects, such as a median, a curb, or a tree corresponding to an indirect road mark, are captured in the image captured by the camera sensor 2000, the processor may detect the object and include the detected object in the image information. At this time, the processor may further supplement the image information by acquiring distance information to the object detected through the camera sensor 2000.

The image information may be information on the object captured in the image. The camera sensor 2000 may include an image sensor and an image processing module.

The camera sensor 2000 may process still images or moving images obtained by the image sensor (e.g., a complementary metal-oxide semiconductor (CMOS) or a chargecoupled device (CCD)).

The image processing module may process the still images or moving images acquired through the image sensor to extract necessary information, and transmit the extracted information to the processor.

In this case, although the camera sensor 2000 may include a stereo camera for improving the measurement accuracy of the object and further securing information such as a distance between the vehicle 700 and the object, the present invention is not limited thereto.

Although embodiments have been mainly described above, these are only illustrative and do not limit the present invention, and those skilled in the art to which the present invention pertains can know that various modifications and applications not exemplified above are possible without departing from the essential characteristics of the embodiments. For example, each component specifically shown in the embodiments may be implemented by modification. In addition, differences related to these modifications and applications should be construed as being included in the scope of the present invention defined in the appended claims.

## Claims

1. A camera actuator comprising:
a housing;
a first lens assembly and a second lens assembly that move in an optical axis direction with respect to the housing;
a ball part positioned in the first lens assembly and the second lens assembly; and
a driving part that moves the first lens assembly and the second lens assembly,
wherein at least one of the first lens assembly and the second lens assembly includes a receiving part that receives a lens, a guiding part which is in contact with the receiving part and on which the ball part is positioned, and a lens protruding part in contact with the receiving part and corresponding to the guiding part.

2. The camera actuator of claim 1, wherein the guiding part is positioned on one side surface of the receiving part, and
the lens protruding part is positioned on the other side surface of the receiving part.

3. The camera actuator of claim 1, wherein an upper surface of the guiding part is disposed at a front end of an upper surface of the lens protruding part.

4. The camera actuator of claim 1, wherein a lower surface of the guiding part is disposed at a rear end of a lower surface of the lens protruding part.

5. The camera actuator of claim 1, wherein a length of the lens protruding part is smaller than a length of the guiding part.

6. The camera actuator of claim 1, wherein the lens protruding part includes a plate, and a support connected to the plate, and
the support is disposed at a rear end of the plate.

7. The camera actuator of claim 6, wherein a height of the plate is greater than a height of the support.

8. The camera actuator of claim 6, wherein a length of the plate is smaller than a length of the support.

9. The camera actuator of claim 6, wherein the lens protruding part includes a first pin groove disposed in an upper surface of the plate.

10. The camera actuator of claim 9, wherein the first pin groove overlaps the support along an optical axis.
